# EUROPEAN PATENT SPECIFICATION

(11) **EP 3 910 496 B1**
(45) Date of publication and mention of the grant of the patent: **24.12.2025**
(21) Application number: 21184282.8
(22) Date of filing: 22.05.2015
(51) Int. Cl.: G06F 16/532

(54) **SEARCH METHOD AND DEVICE**
SUCHVERFAHREN UND VORRICHTUNG
DISPOSITIF ET PROCÉDÉ DE RECHERCHE

(30) Priority: 23.05.2014 KR 20140062568; 27.11.2014 KR 20140167818; 31.12.2014 US 201414588275; 24.02.2015 KR 20150025918
(43) Date of publication of application: 17.11.2021
(62) Divisional of application: 19150621.1
(73) Proprietor: Samsung Electronics Co., Ltd., Suwon-si, Gyeonggi-do 16677 (KR)
(72) Inventor: Joo, Ga-hyun, 16677 Suwon-si, Gyeonggi-do (KR); Kang, Min-jeong, 16677 Suwon-si, Gyeonggi-do (KR); Kang, Woo-shik, 16677 Suwon-si, Gyeonggi-do (KR); Kong, Won-keun, 16677 Suwon-si, Gyeonggi-do (KR)
(74) Representative: Gulde & Partner

(56) References cited:
- US-A1- 2008 082 426
- US-A1- 2014 075 393

## Description

### BACKGROUND

### 1. Field

Apparatuses and methods consistent with exemplary embodiments relate to searching for and acquiring information under a computing environment, and more particularly, to performing a search based on a user's various requirements.

### 2. Description of the Related Art

Various methods of searching for and acquiring information have been developed. Generally, a text-based search is performed to search for information under a computing environment. The text-based search uses a search query including one or more text components such as words or phrases. Text components match each other, or are compared with an index or data, to identify documents such as webpages including text content similar to the text components, metadata, a filename, or a text expression.

With the advancement of technology, information to be searched for is further diversified and the amount of such information has increased. Therefore, in addition to a text component, a different modality of components may be used to perform a search.

US 20080082426 A1 and US 2014/075393 A1 disclose a search method using images.

### SUMMARY

Aspects of one or more exemplary embodiments provide a method as defined in claim 1.

Aspects of one or more exemplary embodiments provide an electronic device as defined in claim 4.

Aspects of one or more exemplary embodiments provide A non-transitory computer-readable recording medium as defined in claim 7. The further embodiments are defined in the dependent claims. BRIEF DESCRIPTION OF THE

### DRAWINGS

These and/or other aspects will become apparent and more readily appreciated from the following description of exemplary embodiments, taken in conjunction with the accompanying drawings in which:
FIG. 1 is a flowchart illustrating a process of performing a search, according to an exemplary embodiment;
FIG. 2 is a conceptual diagram illustrating a configuration of a user interface according to an exemplary embodiment;
FIG. 3 is a conceptual diagram illustrating a structure for constructing a query input device according to an exemplary embodiment;
FIG. 4 is a conceptual diagram illustrating a network environment for executing an exemplary embodiment;
FIGS. 5 to 7 are exemplary diagrams illustrating a method of receiving a query for a single search, according to an exemplary embodiment;
FIGS. 8 to 18 are exemplary diagrams illustrating a method of receiving a query for a multimodal search, according to an exemplary embodiment;
FIGS. 19 and 20 are exemplary diagrams illustrating a method of receiving a query for a multimodal search, according to another exemplary embodiment;
FIGS. 21 and 22 are exemplary diagrams illustrating a method of generating a query input window, according to an exemplary embodiment;
FIG. 23 is an exemplary diagram illustrating a method of receiving a query for a multimodal search, according to another exemplary embodiment;
FIG. 24 is an exemplary diagram illustrating a multimodal query type list according to another exemplary embodiment;
FIGS. 25A to 25E are exemplary diagrams illustrating a method of receiving a query for a multimodal search, according to another exemplary embodiment;
FIG. 26 is a flowchart illustrating a process of displaying a query input window, according to an exemplary embodiment;
FIGS. 27 and 28 are exemplary diagrams illustrating a method of displaying a query input window, according to an exemplary embodiment;
FIG. 29 is a flowchart illustrating a process of receiving a query, according to an exemplary embodiment;
FIGS. 30 to 32 are exemplary diagrams illustrating a method of receiving a query, according to an exemplary embodiment;
FIG. 33 is a flowchart illustrating a process of receiving a query, according to an exemplary embodiment;
FIG. 34 is an exemplary diagram illustrating a method of receiving a query component in which a query type is a text, according to an exemplary embodiment;
FIGS. 35 to 38 are exemplary diagrams illustrating a method of receiving a query component in which a query type is an image, according to an exemplary embodiment;
FIG. 39 is an exemplary diagram illustrating a method of receiving a query component in which a query type is sketch information, according to an exemplary embodiment;
FIG. 40 is an exemplary diagram illustrating a method of receiving a query component in which a query type is audio information, according to an exemplary embodiment;
FIG. 41 is an exemplary diagram illustrating a method of receiving a query, including a plurality of query components having a plurality of query types, and displaying a search result, according to an exemplary embodiment;
FIG. 42 is a flowchart illustrating a process of performing a search, according to an exemplary embodiment;
FIG. 43 is an exemplary diagram illustrating a result obtained by performing a multimodal search, according to an exemplary embodiment;
FIG. 44 is a flowchart illustrating a process of displaying a search result, according to another exemplary embodiment;
FIG. 45 is an exemplary diagram illustrating a priority of a search result according to another exemplary embodiment;
FIG. 46 is an exemplary diagram illustrating a result obtained by performing a multimodal search, according to another exemplary embodiment;
FIG. 47A is an exemplary diagram illustrating a method of receiving a query by using a plurality of devices, according to an exemplary embodiment;
FIG. 47B is an exemplary diagram illustrating a method in which a smart glass according to an exemplary embodiment acquires from an entire screen of a television (TV) an image of a region watched by a user;
FIG. 48 is an exemplary diagram illustrating a method of receiving a query component via a plurality of devices, according to another exemplary embodiment;
FIG. 49 is a flowchart illustrating a process of performing a search, according to an exemplary embodiment;
FIG. 50 is a flowchart illustrating a process of performing a search, according to an exemplary embodiment;
FIG. 51 is a block diagram illustrating a structure of a query input device according to an exemplary embodiment;
FIGS. 52 to 57 are exemplary diagrams illustrating a method of performing a multimodal search, according to another exemplary embodiment;
FIG. 58 is an exemplary diagram illustrating a method of displaying a query type list, according to another exemplary embodiment;
FIG. 59 is an exemplary diagram illustrating a method of displaying a query type list, according to another exemplary embodiment;
FIG. 60 is an exemplary diagram illustrating a method of generating a multimodal query type list, according to an exemplary embodiment;
FIGS. 61 to 65 are exemplary diagrams illustrating a method of performing a multimodal search, according to another exemplary embodiment;
FIG. 66 is a block diagram illustrating a framework for performing a multimodal search based on a query having a plurality of query types, according to an exemplary embodiment;
FIG. 67 illustrates a diagram of a system for implementing one or more exemplary embodiments; and
FIGS. 68 to 72 are exemplary diagrams illustrating a process of extracting image features of a query component having an image query type, according to one or more exemplary embodiments.

### DETAILED DESCRIPTION OF EXEMPLARY EMBODIMENTS

Reference will now be made in detail to exemplary embodiments, examples of which are illustrated in the accompanying drawings, wherein like reference numerals refer to like elements throughout. In this regard, exemplary embodiments may have different forms and should not be construed as being limited to the descriptions set forth herein. Accordingly, exemplary embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list. The expression "at least one" modifies a list of all elements and does not modify each of the elements included in a list.

In this disclosure below, when one part (or element, device, etc.) is referred to as being 'connected' to another part (or element, device, etc.), it should be understood that the former may be 'directly connected' to the latter, or 'electrically connected' to the latter via an intervening part (or element, device, etc.). Furthermore, when it is described that one part (or element, device, etc.) comprises (or includes or has) some elements, it should be understood that it may comprise (or include or has) only those elements, or it may comprise (or include or have) other elements as well as those elements if there is no specific limitation.

In the present specification, a query denotes a command for performing a search. The query may include information that is to be obtained as a search result. The query may include at least one query component (i.e., query input). The query component denotes a unit of information composing a query. Also, a query component input to a device (for example, a query input device) may be referred to as a query input. For example, the query component may include at least one of a keyword included in a text that is input to a query input device by a user, image data, sketch information, video data, and audio data. The audio data may include voice information. A query type may denote a modality of a query component. Herein, the modality is defined as including a source of information about a search database that is algorithmically used for a search, in addition to a sensible aspect of a human. For example, the query type may indicate which type of a text, image data, sketch information, video data, and audio data a query component corresponds to. A query including a plurality of query types denotes that a plurality of query components included in the query correspond to a plurality of query types. For example, when a query includes a first query component, in which a query type is a text, and a second query component, in which the query type is an image, the query includes a plurality of query types. That is, the query type may be at least one of a text query, an image query, an audio type, and a handwriting query.

The audio data may include at least one of sound, voice, audio, and music. In the present specification, a search mode may denote an operation mode for a method in which search is performed. The search mode may include a single input mode (i.e., single input mode) and a multimodal input mode (i.e., multimodal input mode). The single input mode may denote an operation mode in which a search is performed based on a query including one or more query components having one query type. The multimodal input mode may denote an operation mode in which search is performed based on a query including a plurality of query components having a plurality of query types.

Hereinafter, exemplary embodiments will be described in detail.

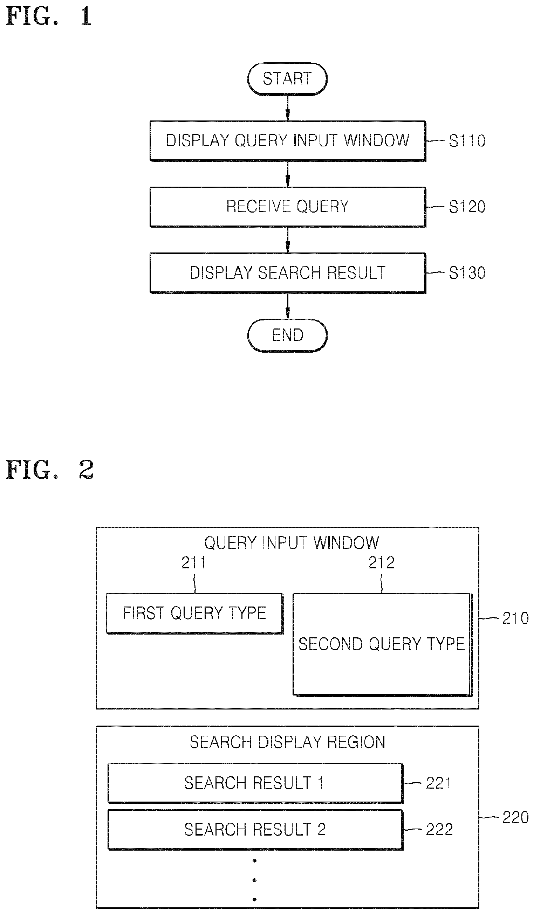

FIG. 1 is a flowchart illustrating a process of performing a search, according to an exemplary embodiment.

Referring to FIG. 1, in operation S110, a computing device may display a query input window that enables a user to input a query. The query input window denotes a user interface through which the computing device receives a query input by the user. The query input window may include a query input tool for inputting a query component. For example, the query input window may include at least one of a text box, a uniform resource locator (URL) input window, a file upload button, a sketch input window, an application execution button, etc. The text box denotes a box in which a text, that is input by using an input device (e.g., a keyboard, a keypad, a virtual keypad, etc.) is displayed. The URL input window denotes a user interface through which a URL, indicating a location of information that is to be input as a query, is input. The file upload button denotes a button that is used to perform an operation in which the computing device selects a file when selected by a user, and an operation of uploading the selected file. The sketch input window denotes a user interface that displays information that is input by a user by using an input device (e.g., a tablet, a touch panel, a track pad, a mouse, a stylus, etc.). The application execution button denotes a button that enables an application, corresponding to a selected button, to be executed. For example, when an application execution button corresponding to photographing is selected, an application for photographing may be executed. As another example, when an application execution button corresponding to recording of a sound is selected, an application for recording the sound may be executed. As another example, the query input device may extract information, such as a Quick Response (QR) code, from an image that is acquired by operating a camera, and receive a query component by using the QR code.

According to an exemplary embodiment, when a search mode corresponds to a multimodal search (i.e., a multimodal input mode), the query input device may display a query input window for receiving a plurality of query components (i.e., query inputs) having a plurality of query types. Alternatively, when the search mode corresponds to a single search (i.e., a single input mode), the query input device may display a single query input window. The single query input window denotes a query input window that receives a query including only one query type.

Subsequently, in operation S120, the query input device may receive a query through the displayed query input window. Here, the query input device may receive a query including a plurality of query types. That is, a query including a plurality of query components of a plurality of query types may be received.

Subsequently, the query input device may select at least one search result, based on the received query. Here, the at least one search result may be selected by using a search engine. The search engine denotes hardware, software, or a combination thereof, which searches for information based on a query. The search engine may be included in the query input device, or may be included in a separate device (e.g., a web server, a media server, a network server, etc.). When the search engine is included in the separate device, the query input device may transmit the received query to the separate device. The query input device may acquire the selected search result from the separate device in response to the transmitted query.

In operation S130, the query input device may display the selected search result. Here, the query input device may prioritize the search result. The query input device may display the search result, based on a priority of the search result.

According to an exemplary embodiment, the query input device may convert (or communicate with a server or another device to convert) a text, included in the search result, into a voice, and output the converted voice. Alternatively, the query input device may convert a voice, included in the search result, into a text, and output the converted text. Accordingly, the query input device enables a blind person or a hearing-impaired person to check the search result.

FIG. 2 is a conceptual diagram illustrating a configuration of a user interface according to an exemplary embodiment. The query input device may display a query input window 210 and a result display region 220 illustrated in FIG. 2, although it is understood that one or more other exemplary embodiments are not limited thereto. The query input device may separately display the query input window 210 and the result display region 220.

The query input window 210 may receive a first query component 211 (i.e., a first query input) corresponding to a first query type and a second query component 212 (i.e., a second query input) corresponding to a second query type. The query input window 210 may be differently displayed based on the first query type and the second query type. Furthermore, the query input window 210 may receive a single query or a query including two or more queries of different types.

The result display region 220 may include a list of response results 221 and 222 (i.e., search results). The first response result 211 may include summary information about identified information in response to the search. For example, the first response result 211 may include a thumbnail for an image document, some of text included in a document, a link for a searched document, an icon, etc.

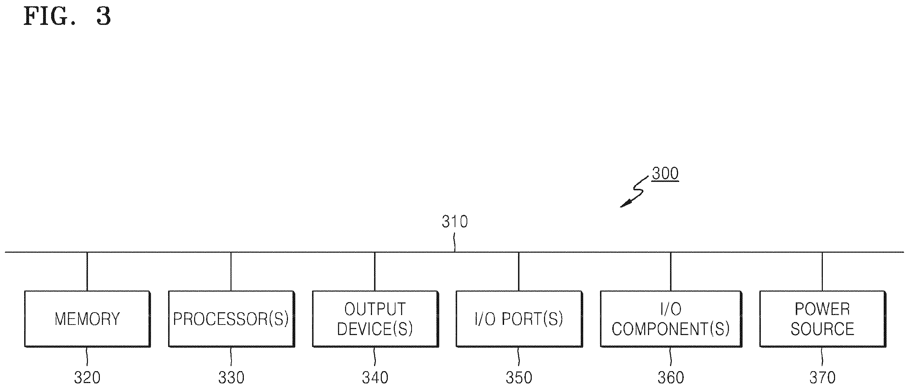

FIG. 3 is a conceptual diagram illustrating a structure for constructing a query input device 300 according to an exemplary embodiment. FIG. 3 illustrates an exemplary environment for implementing an exemplary embodiment. The query input device 300 may be implemented as a computing device. For example, the query input device 300 may be implemented as a type such as a personal computer (PC), a smartphone, a connected television (TV), a notebook (laptop) computer, a personal digital assistant (PDA), a tablet PC, a portable multimedia player, a netbook, a workstation, etc.

Exemplary embodiments may be described in association with machine-available instructions or a computer code including computer-executable instructions such as program modules executed by a device such as a computer, a personal portable terminal, or a handheld device. Generally, program modules including routines, programs, objects, components, and data structures denote a code that performs certain works or abstract data types. Exemplary embodiments may be implemented in various systems including handheld devices, consumer electronic devices, general-use computers, and special computing devices. Also, exemplary embodiments may be implemented under a distributed computing environment.

The query input device 300 may include a memory 320, at least one processor 330, at least one output device 340, at least one input/output (I/O) port 350, at least one I/O component 360, a power source 370, and a bus 310 that connects the elements. The bus 310 may include one or more types of buses such as an address bus, a data bus, or a combination thereof. Functional blocks of FIG. 3 are illustrated as lines, for conciseness. However, the query input device 300 may be substantially configured with various components. For example, the output device 340 such as a display device may be regarded as the I/O component 360. Also, the processor 330 may include a memory 320.

The query input device 300 may include various computer-readable media. The computer-readable media may be arbitrary available media accessible by the query input device 300, and may include volatile media, nonvolatile media, movable media, and non-movable media. Computer storage media may include volatile media, nonvolatile media, movable media, or non-movable media, which are implemented in an arbitrary method or technology for storing computer-readable instructions, data structures, program modules, or information such as data. The computer storage media may include RAM, ROM, EEPROM, flash memory, memory technology, CD-ROM, DVD, holographic memory, magnetic cassettes, magnetic tapes, magnetic disks, or other magnetic storage devices, may be used to encode desired information, or may include arbitrary media accessible by the query input device 300, but is not limited thereto. In an exemplary embodiment, the computer storage media may be selected from various types of computer storage media. In another embodiment, the computer storage media may be selected from non-transitory computer storage media.

The memory 320 may include volatile and/or non-volatile memory types of computer storage media. The memory 320 may be a movable memory, a non-movable memory, or a combination thereof. For example, the memory 320 may include a semiconductor memory, a hard drive, an optical disk drive, etc. The query input device 300 may include one or more processors 330 that read out data from various entities such as the memory 320 or the I/O components 360. The output device 340 provides data instructions to a user or another device. For example, the output device 340 may include at least one of a display device, a speaker, a printing component, a vibration motor, a communication device, etc.

The I/O port 350 allows the query input device 300 to be logically connected to other devices including the I/O component 360. For example, the I/O component 360 may include at least one of a microphone, a joystick, a game pad, a satellite antenna, a scanner, a printer, a wireless device, a keyboard, a track pad, a touch screen, a rotatable dial, a camera, and a handwriting input unit. The handwriting input unit may be a touch screen and may be used to input a handwriting image. The touch screen may include an electro-magnetic resonance (EMR) pad that senses a touch by an active stylus pen (hereinafter referred to as a pen), although one or more other exemplary embodiments are not limited thereto.

The pen may include a coil, and a magnetic field may be generated by the coil at a certain point of the EMR pad. The EMR pad may detect a position of the generated magnetic field to detect a position where the pen touches the EMR pad. The EMR pad may detect the position where the magnetic field is generated by the pen to detect a pen touch position on a touch screen. A controller may detect the pen touch position and thus receive a handwriting image.

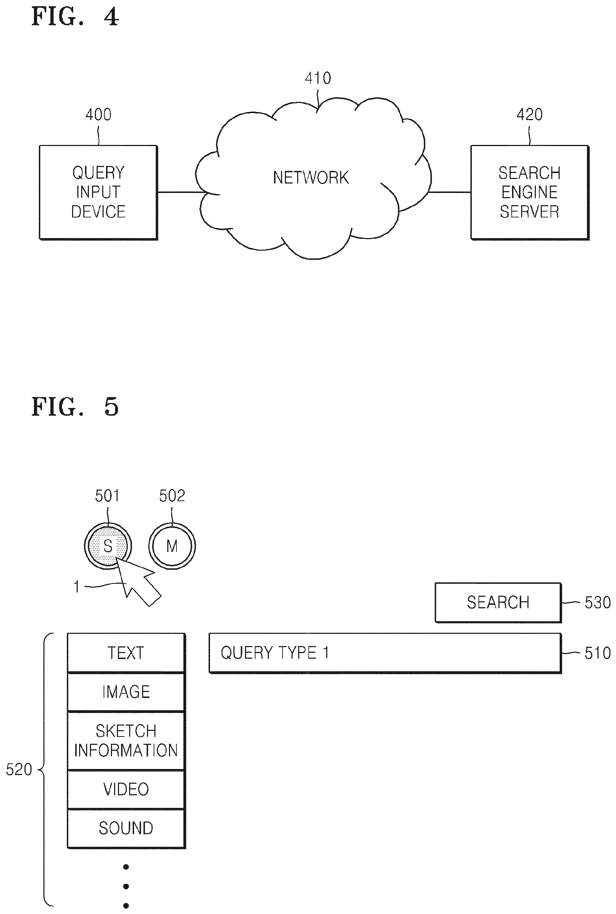

FIG. 4 is a conceptual diagram illustrating a network environment for executing an exemplary embodiment. The network environment is merely an example of an environment that may be applied to an exemplary embodiment, and may include an arbitrary number of components in terms of a broad configuration.

The network environment may include a network 410, a query input device 400, and a search engine server 420. The network 410 may include arbitrary computer networks such as the Internet, an Intranet, non-public and public local area networks, non-public and public wide area networks, wireless data or phone networks, etc. The query input device 400 is a device that provides a query. According to an exemplary embodiment, the query input device 400 may output a search result as well as a query input.

The search engine server 420 may include an arbitrary computing device such as the query input device 400. The search engine server 420 may provide at least some of operations that provide a search service.

FIGS. 5 to 7 are exemplary diagrams illustrating a method of receiving a query for a single search, according to an exemplary embodiment.

When a search mode is a single search mode (i.e., single input mode), a query input device according to an exemplary embodiment may display a single query input window 510 through which a query input including one query type is input. The query input device may display at least one search mode selection object for selecting the search mode. Referring to FIG. 5, the query input device may display a single input mode selection icon 501 (i.e., single input mode selection icon) and a multimodal input mode selection icon 502 (i.e., multimodal input mode selection icon). When a user input for selecting the single input mode selection icon 501 is received from a user 1, the query input device may display the single query input window 510. Here, the user input may vary depending on the type of the query input device or an I/O device. For example, when the query input device is a PC outputting a graphical user interface (GUI), an event in which the single input mode selection icon 501 is clicked or selected by using a mouse cursor may be a user input that selects the single input mode selection icon 501. As another example, when the query input device is a handheld device including a touch screen, a touch of a part of a human body or an electronic pen on a position in which the single input mode selection icon 501 is displayed on the touch screen may be a user input that selects the single input mode selection icon 501.

Moreover, the query input device may display a single query type list 520. The single query type list 520 may be a display item for selecting a query type. The display item may be a UI element displayed on a screen. The single query type list 520 may include a plurality of objects. Each object included in the single query type list 520 may respectively correspond to one query type. That is, the single query type list 520 may include queries of at least one of a text type, an image type, a handwriting type, a video type, and an audio type. In FIG. 5, the single query type list 520 is illustrated as a set of button-type objects, but each of the objects may be replaced by various forms, for example, an icon, a widget, etc., in one or more other exemplary embodiments.

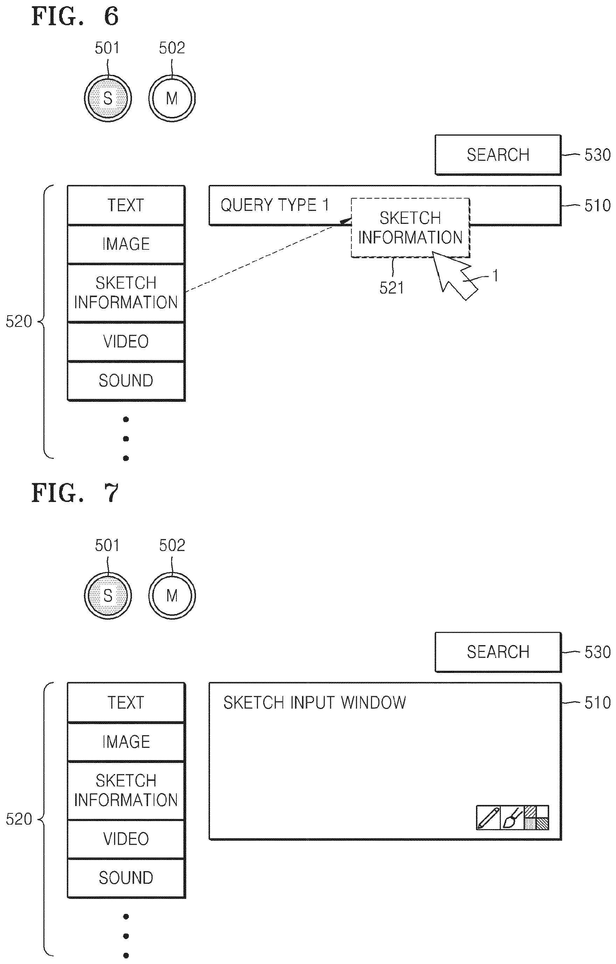

The query input device may determine a query type of a query component that is to be received by the single query input window 510, based on a selection to the single query type list 520. Referring to FIG. 6, the user 1 may determine the query type included in the single query input window 510 by using an input that drags and drops one of objects, included in the single query type list 520, to a region in which the single query input window 510 is displayed. The drag and drop denotes an input scheme in which one object is selected by using a mouse click or a touch input in a GUI, a position is moved, and the mouse click or the touch input ends. For example, when a drag-and-drop event for an object 521 corresponding to sketch information is received by the single query input window 510, as illustrated in FIG. 7, a sketch input window for inputting the sketch information to the single query input window 510 may be displayed. Subsequently, when an object corresponding to another query type is selected from among the objects included in the single query type list 520, the sketch input window may be changed to an input window for inputting a query component corresponding to the other query type. Here, the drag and drop may be variously replaced by various input schemes. For example, according to another exemplary embodiment, the user 1 may determine the query type by using an input such as those described above with reference to the selection of the single input mode selection icon 501. According to an exemplary embodiment, an area or position of the single query input window 510 may be changed or may vary depending on a query type that is to be displayed (i.e., a display item corresponding to a query input of a query type) in the single query input window 510. Alternatively, a size of a query component (i.e., display item) displayed in the query input window 810 may be changed or may vary depending on an area of a query component input region. For example, when the number of characters input to a text input window increases, e.g., to be more than a predetermined number, a font size of each of the characters displayed in the text input window may be reduced. For example, according to one or more exemplary embodiments, the user 1 may select a query type via a selection on the single input mode selection icon 501. According to one or more exemplary embodiments, a region or a position of the single query input window 510 may be changed based on a query type (i.e., a display item corresponding to a query input for a query type) of a query to be displayed on a query input window. On the other hand, a size of a query component (i.e., a display item) of a query to be displayed on the single query input window 510 may be changed based on a query component input region. For example, in inputting characters, if a predetermined number or more of characters are input, a text input window may enlarge, or characters in the text input window may be changed to a small size.

The controller may operate to display the query input window 510 corresponding to a query type selected through the display item 520, acquire a search result on the basis of a query which is input through the query input window 520, and display the search result. For example, when a query type is a text, the controller may operate to display a display item which enables a text to be input.

When the selected query type is audio, the controller may operate to display on the query input window 510 a display item for inputting as a query at least one of voice information acquired through a microphone and audio data stored in a memory. For example, an icon for selecting an icon enabling the microphone to operate and the audio data stored in the memory may be displayed on the query input window 510. The microphone may receive a voice input to output an electrical signal and may acquire voice information from the electrical signal. The audio data may be stored as a file in the memory.

When the selected query type is an image, the controller may operate to display, on the query input window 510, a display item for inputting, as a query, at least one selected from image data acquired through a camera and image data stored in the memory. For example, an icon for selecting an icon enabling the camera to operate and the image data stored in the memory may be displayed on the query input window 510. The camera may acquire image data. The image data may be stored as a file in the memory.

Moreover, the query input device may include a search button 530 for inputting a command that allows a search to be performed based on a query input to the single query input window 510. According to one or more other exemplary embodiments, the search button 530 may not be displayed or may be changed to another form.

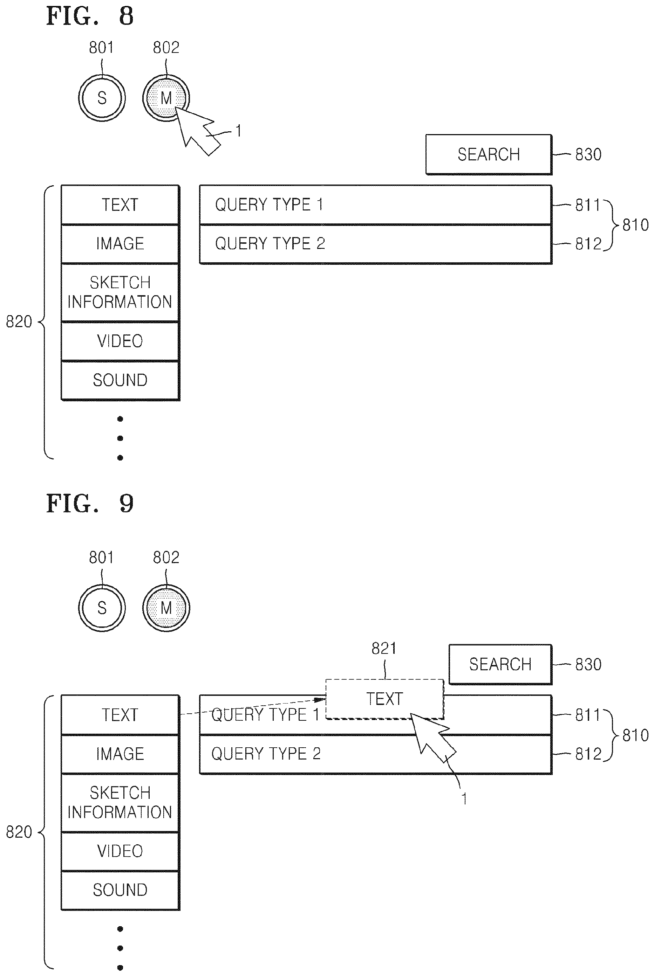

FIGS. 8 to 18 are exemplary diagrams illustrating a method of receiving a query for a multimodal search, according to an exemplary embodiment.

When a search mode is a multimodal search mode (i.e., a multimodal input mode), a query input device according to an exemplary embodiment may display a query input window 810 through which a query including one query type is input. When a plurality of query types are selected through a display item 820, the controller may operate to display display items 811 and 812 for receiving a plurality of queries on the query input window 810. For example, referring to FIG. 8, the query input window 810 may include a first query component input region 811 (i.e., a first region) and a second query component input region 812 (i.e., a second region).

The query input device may display at least one search mode selection object for selecting the search mode. Referring to FIG. 8, the query input device may display a single input mode selection icon 801 (i.e., a single input mode selection icon) and a multimodal input mode selection icon 802 (i.e., a multimodal input mode selection icon). When a user input for selecting the multimodal input mode selection icon 801 is received from a user 1, the query input device may display the query input window 810. A query input window, which may receive a plurality of query components (i.e., query inputs) having a plurality of query types, may be referred to as a multimodal query input window. Here, the user input may vary depending on the type of the query input device or an I/O device. For example, when the query input device is a PC outputting a GUI, an event in which the multimodal input mode selection icon 801 is clicked or selected by using a mouse cursor may be a user input that selects the multimodal input mode selection icon 801. As another example, when the query input device is a handheld device including a touch screen, a touch of a part of a human body or an electronic pen (e.g., a stylus) on a position in which the multimodal input mode selection icon 801 is displayed on the touch screen may be a user input that selects the multimodal input mode selection icon 801.

Moreover, the query input device may display a single query type list 820. The single query type list 820 may include a plurality of objects. Each object included in the single query type list 820 may respectively correspond to one query type. In FIG. 8, the single query type list 820 is illustrated as a simple button type, but each of the objects may be replaced by various forms such as an icon, a widget, etc., in one or more other exemplary embodiments.

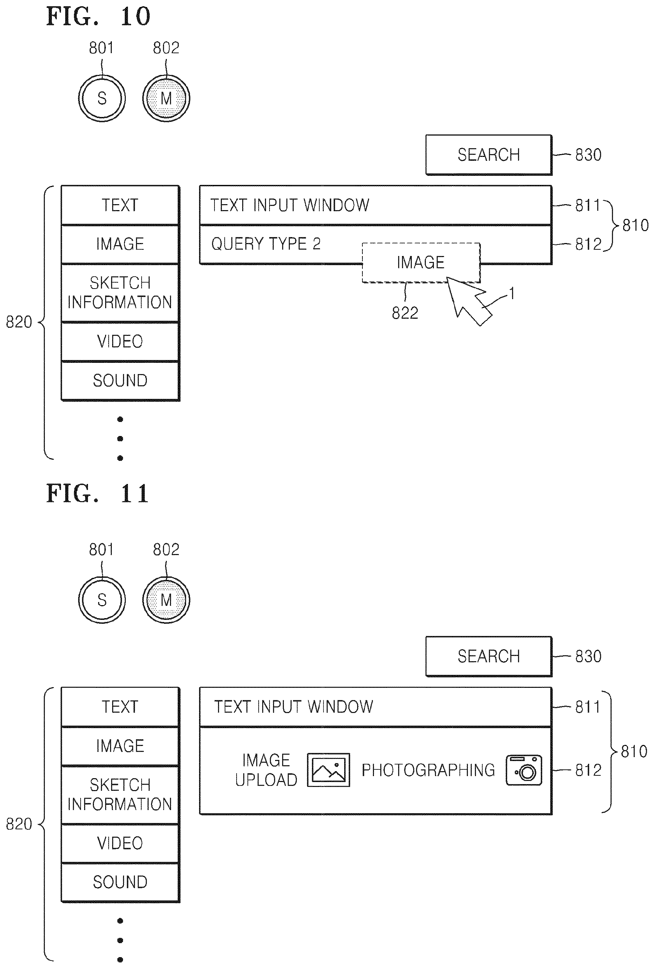

The query input device may determine a query type included in the multimodal query input window 810, based on the single query type list 820. Referring to FIG. 9, the user 1 may determine the query type included in the query input window 810 by using an input that drags and drops one of objects, included in the single query type list 820, to a region in which the multimodal query input window 810 is displayed. The drag and drop denotes an input scheme in which one object is selected by using a mouse click or a touch input in a GUI, a position is moved, and the mouse click or the touch input ends. For example, when a drag-and-drop event for an object 821 corresponding to a text is input to the first query component input region 811 of the query input window 810 as illustrated in FIG. 9, a text input window for inputting the text to the first query component input region 811 may be displayed, as illustrated in FIG. 10. The text input window may include a text box in which an input text is displayed. Also, referring to FIG. 10, when a drag-and-drop event for an object 822 corresponding to an image is input to the second query component input region 812, a user interface for inputting a query component, in which a query type is an image, to the second query component input region 812 may be displayed, as illustrated in FIG. 11. In this case, the drag and drop may be variously replaced by various input schemes. For example, according to one or more exemplary embodiments, the user 1 may determine the query type via a selection of the multimodal input mode selection icon 801. Furthermore, an area or a position of the first query component input region 811 or second query component input region 812 may be changed or may vary with a query type that is to be displayed (i.e., a display item corresponding to a query input of a query type) in the first query component input region 811 or the second query component input region 812. Alternatively, a size of a query component displayed in the query input window 810 may be changed or may vary with an area of a query component input region. For example, when the number of characters input to a text input window increases, e.g., to be more than a predetermined number, a font size of each of the characters displayed in the text input window may be reduced.

Moreover, in FIGS. 8 to 11, the query input window 810 is illustrated as receiving a query including at least two query types (i.e., query inputs of at least two query types). It is understood that the number of query types included in a query received through the query input window 810 may be greater than, equal to, or less than two in exemplary embodiments. The user 1 may select at least one from among the objects included in the single query type list 820. For example, one of the objects included in the single query type list 820 may be clicked by using a mouse or a mouse cursor. Alternatively, one of the objects displayed on the touch screen may be touched. However, it is understood that one or more other exemplary embodiments are not limited thereto.

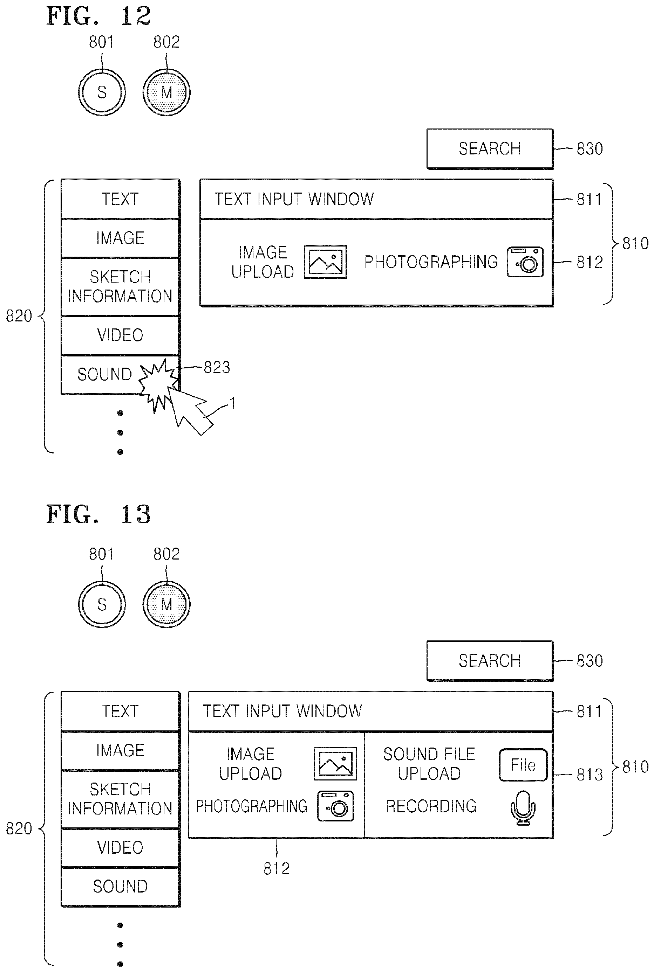

Referring to FIG. 12, an object 823 corresponding to audio may be selected by an input received from the user 1. When at least one object is selected from among the objects included in the single query type list 820, the query input device may add a third query component input region 813 (i.e., a third region) to the query input window 810. The query input device may add the third query component input region 813 to the query input window 810 without changing an overall area of the query input window 810. For example, referring to FIG. 13, the query input device may display the third query component input region 813 in a portion of the second query component input region 812. However, it is understood that one or more other exemplary embodiments are not limited thereto. For example, according to another exemplary embodiment, the query input device may display the third query component input region 813 on an additional region where the query input window 810 is enlarged compared to a case before the third query component input region 813 is displayed. When an object 823 corresponding to audio is selected as illustrated in FIG. 12, a user interface for inputting a query component, in which a query type is audio, to the third query component input region 813 may be displayed, as illustrated in FIG. 13,.

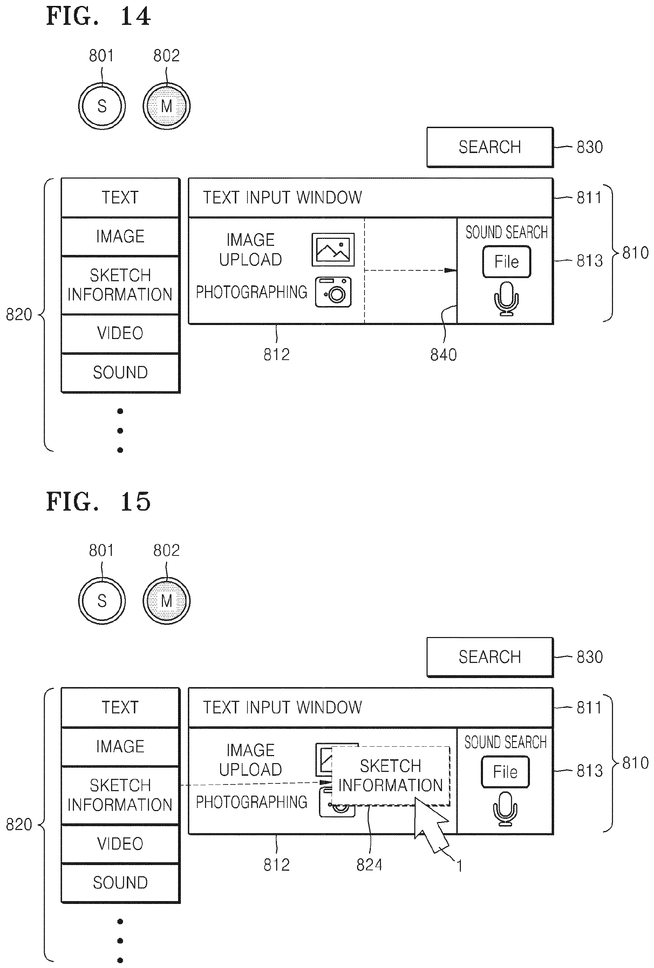

Moreover, an area of each query component input region included in the query input window 810 may be changed or may vary. For example, when a text input to the first query component input region 811 is difficult to be displayed in an entirety of the first query component input region 811, an area of the first query component input region 811 may increase. As another example, as illustrated in FIG. 14, a boundary 840 between query component input regions may be moved based on a user input. Here, the user input may be an input that drags the boundary 840, although it is understood that one or more other exemplary embodiments are not limited thereto.

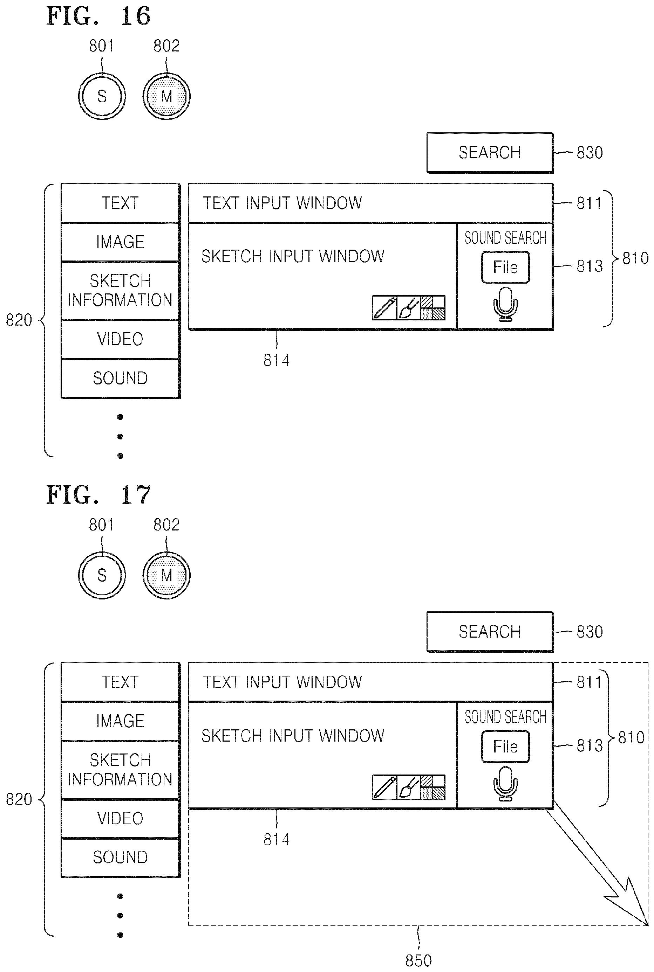

Furthermore, a user interface displayed in a query component input region may be changed to a user interface for inputting a query component corresponding to another query type. Referring to FIG. 15, an object 824 corresponding to sketch information among the objects included in the single query type list 820 may be received, and an event generated by the user 1 may be received as a user input that selects the second query component input region 812. Here, the user input may be a drag-and-drop event that starts from the object 824 displayed in the single query type list 820 and ends in the second query component input region 812, but is not limited thereto. In this case, as illustrated in FIG. 16, a sketch input window 814 for inputting sketch information may be displayed in the second query component input region 812 of FIG. 15.

Also, a size of the query input window 810 may be changed according to a user input. The query input window 810 may be enlarged or reduced according to the user input. As illustrated in FIG. 17, when the user input is received, the query input window 810 may be displayed in an enlarged or reduced region 850. Here, the user input may be an input that drags an edge of the query input window 810, although it is understood that one or more other exemplary embodiments are not limited thereto.

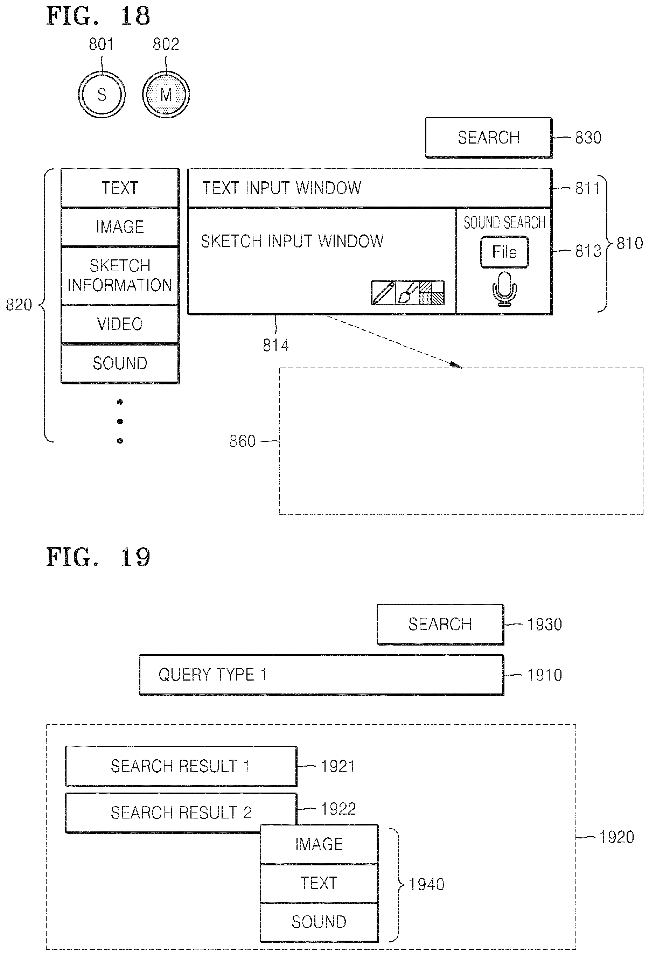

Moreover, a position in which the query input window 810 is displayed may be moved according to a user input. As illustrated in FIG. 18, when the user input is received, the query input window 810 may be displayed in a moved region 860. Here, the user input may be an input that drags a partial position of the query input window 810, although it is understood that one or more other exemplary embodiments are not limited thereto.

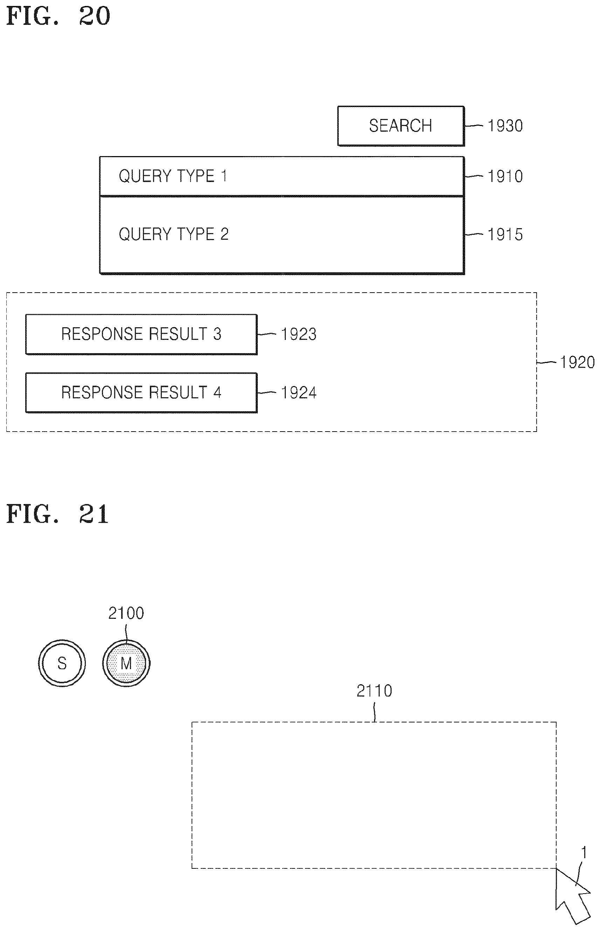

FIGS. 19 and 20 are exemplary diagrams illustrating a method of receiving a query for a multimodal search, according to another exemplary embodiment. FIG. 19 is an exemplary diagram illustrating a screen that is obtained by performing a search based on the single search mode. A query input window may include a first query component input region 1910 for inputting a query component corresponding to a first query type. A query component is received through the first query component input region 1910, and then, when a search button 1930 is selected, a search may be performed based on a query including the received query component. Here, the search may be performed by using a search engine included in the query input device. Alternatively, the query input device may transmit the query to a search engine server and receive a response to the query, and thus, the search may be performed.

Search results may be displayed in a result display region 1920 as a result of the search. Referring to FIG. 19, a first search result 1921 and a second search result 1922 may be displayed in the result display region 1920.

Subsequently, when at least one search result is selected from among the displayed search results on the basis of a user input, a query type list 1940 may be displayed. Referring to FIG. 19, when the second search result 1922 is selected, the query type list 1940 may be displayed near the second search result 1922. In FIG. 19, the query type list 1940 is illustrated as a set of objects configured with buttons, but each of the objects may be replaced by various forms, for example, an icon, a widget, etc., in one or more other exemplary embodiments. In this case, a multimodal search may be performed based on the second search result 1922, and a query component may be input to the second query component input region 1920. However, the present exemplary embodiment is not limited thereto. For example, according to one or more other exemplary embodiments, the multimodal search may be performed based on an original query component input to the first query component input region 1910 and a query component input to the second query component input region 1920.

When a query type is selected from the query type list 1940 of FIG. 19, the query input device may switch the search mode from the single search mode to the multimodal search mode. Referring to FIG. 20, a second query component input region 1915 for inputting a query component corresponding to the second query type may be further displayed. Subsequently, when a search button 1930 is selected, a multimodal search may be performed based on a query component input to the first query component input region 1910 and a query component input to the second query component input region 1920. In this case, the multimodal search may be performed based on the second search result 1922 and the query component input to the second query component input region 1920, although it is understood that one or more other exemplary embodiments are not limited thereto. For example, according to another exemplary embodiment, the multimodal search may be performed based on the original query component input to the first query component input region 1910 and query component input to the second query component input region 1920. Search results 1923 and 1924 may be displayed in a result display region as a result of the multimodal search.

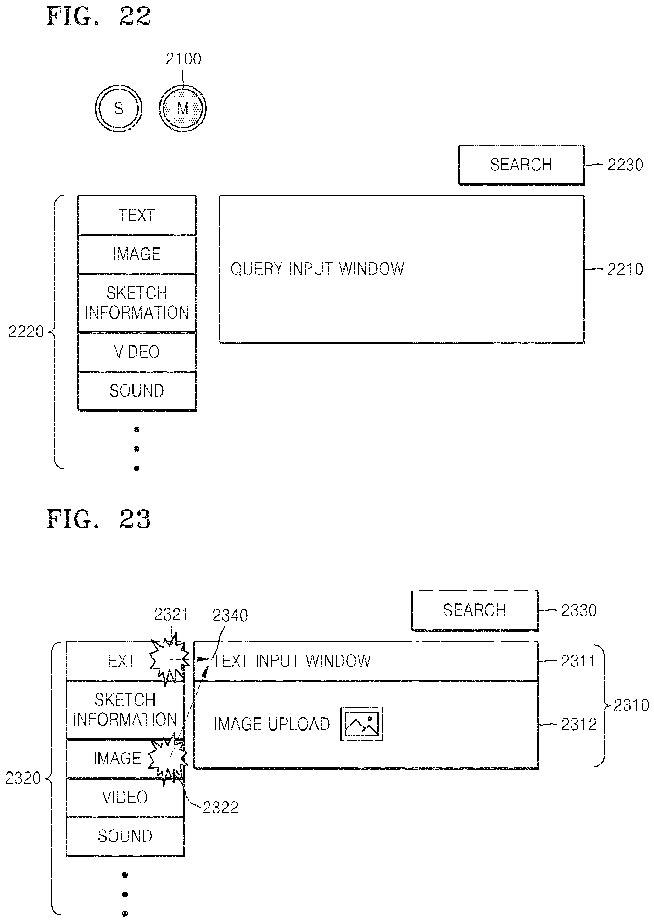

FIGS. 21 and 22 are exemplary diagrams illustrating a method of generating a query input window, according to an exemplary embodiment. According to an exemplary embodiment, a search mode is selected based on a search mode selection object 2100, and then, as illustrated in FIG. 21, an arbitrary region 2110 may be selected or generated based on a user input received from a user 1. Here, the user input may be a drag of an arbitrary position, although it is understood that one or more other exemplary embodiments are not limited thereto. When the arbitrary region 2110 is selected, as illustrated in FIG. 22, a query input window may be displayed in the arbitrary region 2110 according to the selected search mode. For example, when the selected search mode is the single search mode, the query input window may be a single query input window, and when the selected search mode is the multimodal search mode, the query input window may be a multimodal query input window. Also, a query type list 2220 and a search button 2230 may be displayed.

FIG. 23 is an exemplary diagram illustrating a method of receiving a query for a multimodal search, according to another exemplary embodiment. In the exemplary embodiment of FIG. 23, the query input device may include an input device (e.g., input unit) that simultaneously receives inputs for a plurality of points. For example, the query input device may include a touch screen. While a single query type list 2320 is displayed, a plurality of objects included in the single query type list 2320 may be selected. Referring to FIG. 23, a first object 2321 (in which a query type is a text) and a second object 2322 (in which a query type is an image) may be selected. For example, two fingers of a user may respectively touch the objects 2321 and 2322 which are displayed on the touch screen. A plurality of objects are selected, and when a selected position of each object is moved to one point, a query input window 2310 for receiving query components having a plurality of query types corresponding to the plurality of objects may be displayed. For example, referring to FIG. 23, an input in which the two fingers touching the objects 2321 and 2322 displayed on the touch screen move to one point 2340 in a state of touching the touch screen and then are detached from the touch screen may be received. That is, an input that simultaneously drags and drops the plurality of objects to the one point 2340 may be received. The query input window 2310, which includes a text input window 2311 for inputting a text and an image upload window 2312 for uploading an image, may be displayed. Here, the one point 2340 may not precisely or exactly correspond to the same point. For example, when two points are disposed within an arbitrary distance (e.g., within a predetermined distance) of each other, it may be considered that a plurality of objects are located at one point.

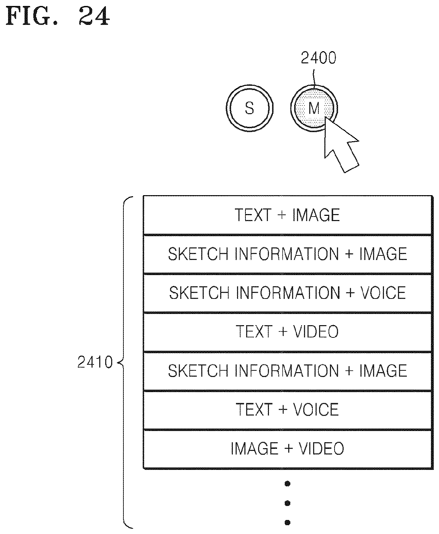

FIG. 24 is an exemplary diagram illustrating a multimodal query type list 2410 according to another exemplary embodiment. According to the present exemplary embodiment, when a search mode is the single search mode, the query input device may display a single query type list, and when the search mode is the multimodal search mode, the query input device may display a multimodal query type list. An object included in the multimodal query type list may represent a combination of a plurality of query types. Referring to FIG. 24, when the search mode is set to the multimodal search mode by using a search mode selection object 2400, a multimodal query type list 2410 that denotes a list of a combination type in which two or more query types are combined may be displayed.

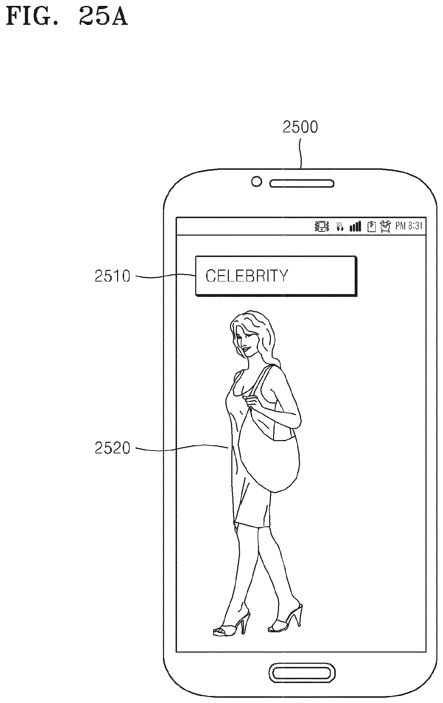

FIGS. 25A to 25E are exemplary diagrams illustrating a method of receiving a query for a multimodal search, according to another exemplary embodiment.

A query for a multimodal search is received by using a portion of a search result. Referring to FIG. 25A, a query input device 2500 displays an image 2520 as a search result that is obtained by performing a search based on a query input to a query input window 2510.

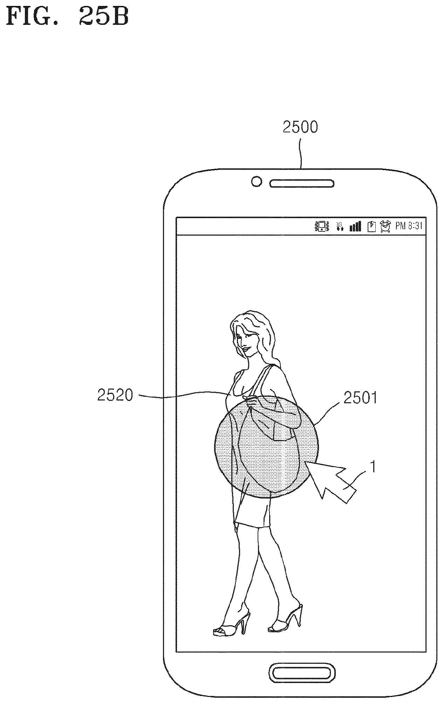

Referring to FIG. 25B, a partial region 2501 of the image 2520 is selected. The partial region 2501 is manually selected based on a user input, or, optionally, may be automatically selected based on an analysis of the search result, for example, image recognition. When a user 1 draws a looped curve by dragging a mouse cursor or using a touch input, the query input device 2500 determines the inside of the looped curve as the partial region 2501 selected from the image 2520.

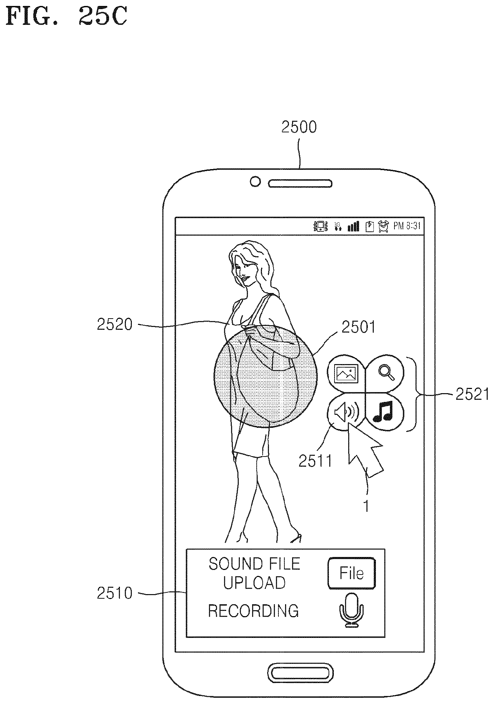

When the partial region 2501 is selected from the search result, a query type list is displayed. Referring to FIG. 25C, the query type list is displayed in the form of a floating icon or, optionally, in the form of a floating widget near the selected partial region 2501. The floating icon or the floating widget is displayed on content, and is an object of which a position is movable.

For the displayed query type list 2520, a user input for selecting a query type is received from the user 1. When the query type is selected, the query input window corresponding to a displayed query type is displayed. For example, the partial region 2501 including a bag displayed in the image 2520 illustrated in FIG. 25C may be selected. Subsequently, when an icon 2511 corresponding to voice search among a plurality of query types is selected from among a plurality of displayed floating icons 2521, the query input window 2510 for inputting a query component (in which a query type is a voice) is displayed. A query component of a voice type may be referred to as an audio query.

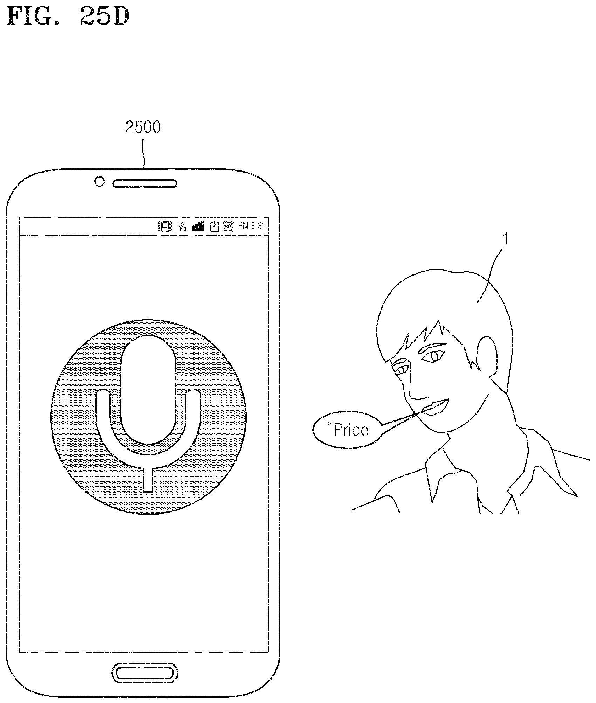

The query input window 2510 for inputting the query component (in which the query type is a voice) includes a voice (i.e., audio) recording icon. When the user 1 selects the voice recording icon, the query input device 2500 may operate a microphone, and execute an application that is used to acquire voice information. Referring to FIG. 25D, when the application for acquiring the voice information is being executed, the user 1 inputs a voice to the query input device 2500.

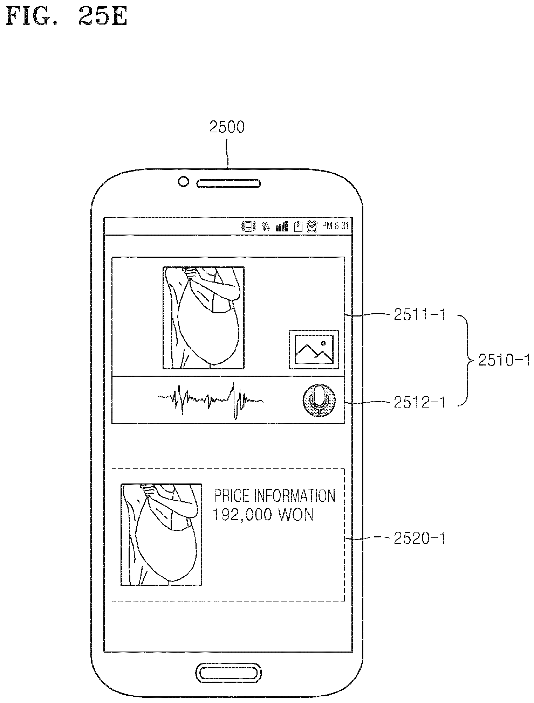

When query components are input through the query input window 2510, the query input device 2500 receives, as the query components, a portion of a selected search result (e.g., corresponding to the partial region 2501 selected from the image 2520) and information that is input through the query input window 2510. Referring to FIG. 25E, a query input window 2510-1 that includes an image input region 2511-1 (in which an image with a bag displayed therein is displayed) and a voice input region 2512-1 (in which at least one of a waveform of input voice information, a predetermined waveform, and a text converted from the voice information is displayed) is displayed as display items corresponding to a query. Here, the waveform of the input voice information may be a waveform corresponding to at least one of a predetermined portion of the voice information (e.g., a beginning of the voice information), a predetermined length of the voice information, a predetermined audio feature or characteristic of the voice information, etc. As illustrated in FIG. 25D, when voice information "price" is input, the query input device 2500 performs a multimodal search based on a query that includes an image, including a bag, and a voice "price". As illustrated in FIG. 25E, the query input device 2500 displays information about the price of the bag, included in the image, in a search result display region 2520-1 as a search result obtained by performing the multimodal search.

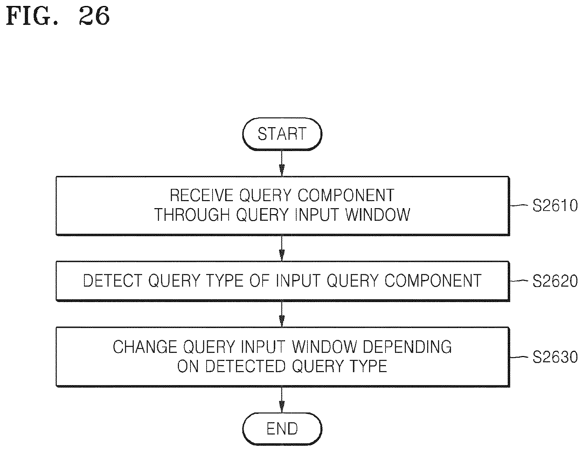

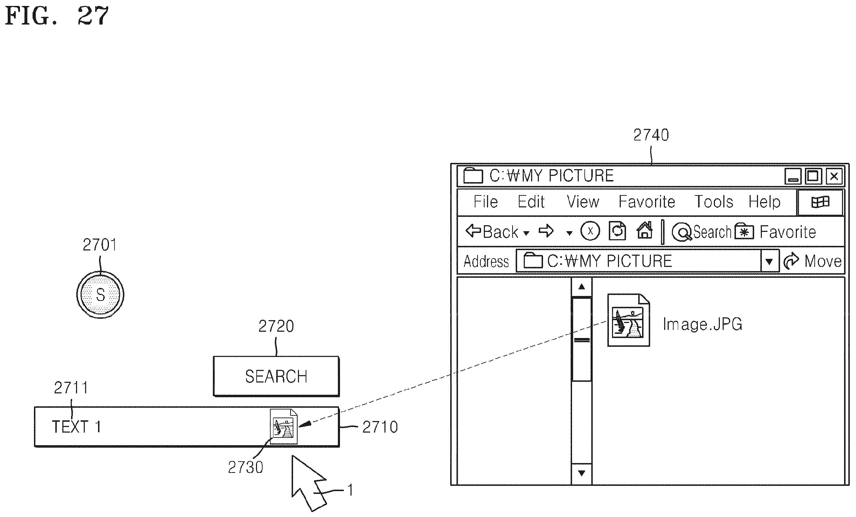

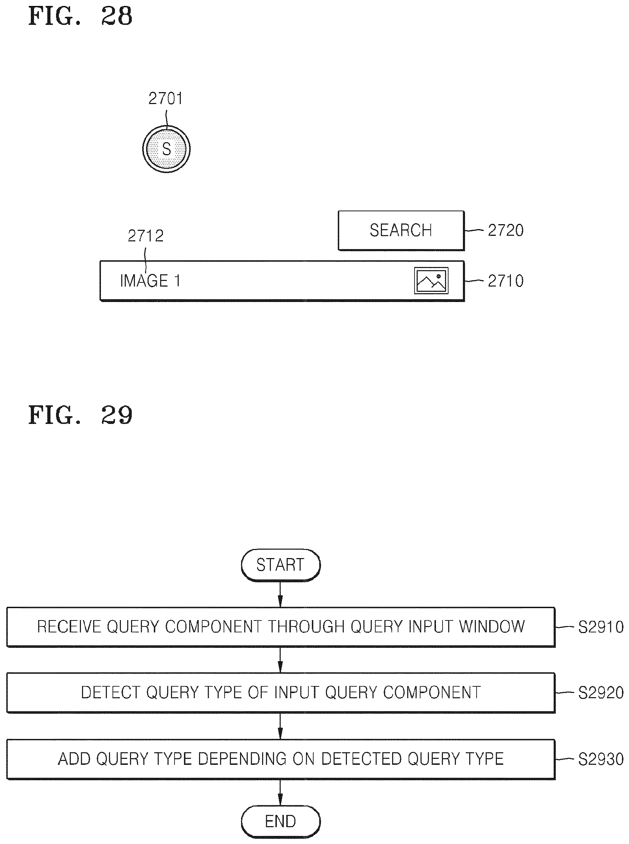

FIG. 26 is a flowchart illustrating a process of displaying a query input window, according to an exemplary embodiment. FIGS. 27 and 28 are exemplary diagrams illustrating a method of displaying a query input window, according to an exemplary embodiment. According to an exemplary embodiment, a query component may be input in a state in which a query type is not selected before a query is input.

In operation S2610, the query input device may receive a query component through a query input window. A method of receiving a query component may be variously implemented. Referring to FIG. 27, the query input device may display an indicator 2701 indicating a set search mode, a query input window 2710, and a search button 2720. The query input window 2710 of FIG. 27 includes a user interface 2711 for inputting a query component in which a query type is a text. Here, the query input device may receive an input, through which a file icon 2730 (included in a file search window 2740) is dragged and dropped to the query input window, from a user 1 in order to receive a query component. However, it is understood that one or more other exemplary embodiments are not limited to a drag-and-drop input method. For example, the file could be selected by a clicking operation (e.g., double clicking) according to another exemplary embodiment. Furthermore, the file search window 2740 is not limited to a form illustrated in FIG. 27. For example, according to another exemplary embodiment, the file search window 2740 of FIG. 27 may be displayed by dividing a screen of the query input device, or may be displayed by changing the screen of the query input device to a file search screen.

In operation S2620, the query input device may detect a query type of the received query component. A method of detecting a query type may be variously implemented. For example, when the received query component is a file, the query input device may detect the query type of the query component according to an extension of the file. In this case, when the extension of the file is jpg, gif, or bmp, the query input device may determine the query type of the query component as an image, and when the extension of the file is avi, mp4, or wmv, the query input device may determine the query type of the query component as a video. Alternatively, when an application is been used for receiving the query component, the query input device may detect a query type of the query component according to the kind of the application. For example, when information acquired by using a camera application is received as a query component, the query input device may determine a query type of a query component as an image, and when a query component is received by using a voice recording application, the query input device may determine a query type of the received query component as voice information.

In operation S2630, the query input device may change a query input window so as to include a user interface through which the query component corresponding to the detected query type is received (and through which a display item corresponding to the previously received query component is displayed). Also, a display item corresponding to the received query component may be displayed. Referring to FIG. 28, when an image file is received as in FIG. 27, the query input device may change a query input window 2710, configured with a text input box that is the user interface 2711 through which a text is input, to another query input window 2710 which is configured with an image upload tool for inputting an image 2712.

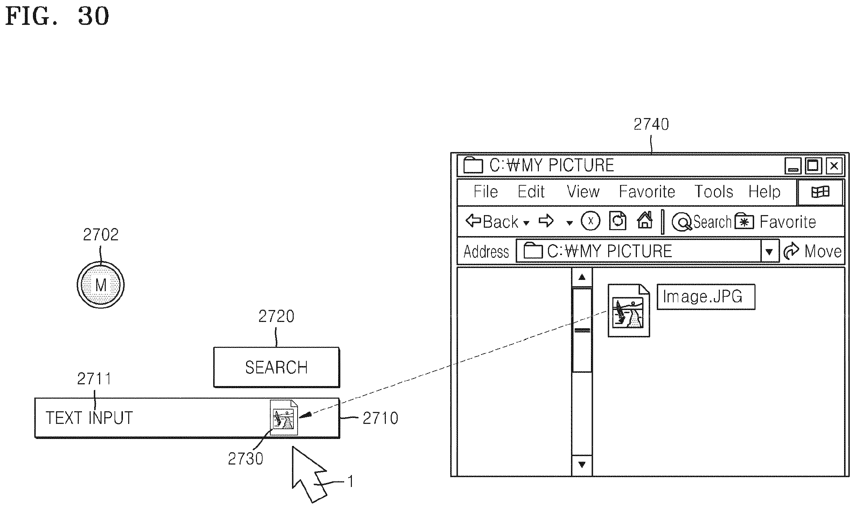

FIG. 29 is a flowchart illustrating a process of receiving a query, according to an exemplary embodiment. FIGS. 30 to 32 are exemplary diagrams illustrating a method of receiving a query, according to an exemplary embodiment. According to an exemplary embodiment, a query component may be input without first selecting a query type.

In operation S2910, the query input device may receive a query component through a query input window. A method of receiving a query component may be variously implemented. Referring to FIG. 30, the query input device may display an indicator 2702 indicating a set search mode, a query input window 2710, and a search button 2720. In FIG. 30, the query input window 2710 is illustrated as including a user interface 2711 for inputting a query component in which a query type is a text. Here, the query input device may receive an input through which a file icon 2730 (included in a file search window 2740) is dragged and dropped to the query input window, from a user 1 in order to receive a query component. However, it is understood that one or more other exemplary embodiments are not limited to a drag-and-drop input method. For example, the file could be selected by a clicking operation (e.g., double clicking) according to another exemplary embodiment. Furthermore, the file search window 2740 is not limited to a form illustrated in FIG. 30. For example, according to another exemplary embodiment, the file search window 2740 of FIG. 30 may be displayed by dividing a screen of the query input device, or may be displayed by changing the screen of the query input device to a file search screen.

In operation S2920, the query input device may detect a query type of the received query component. A method of detecting a query type may be variously implemented. For example, when the received query component is a file, the query input device may detect the query type of the query component according to an extension of the file. Alternatively, when an application is used for receiving the query component, the query input device may detect a query type of the query component according to the kind of the application.

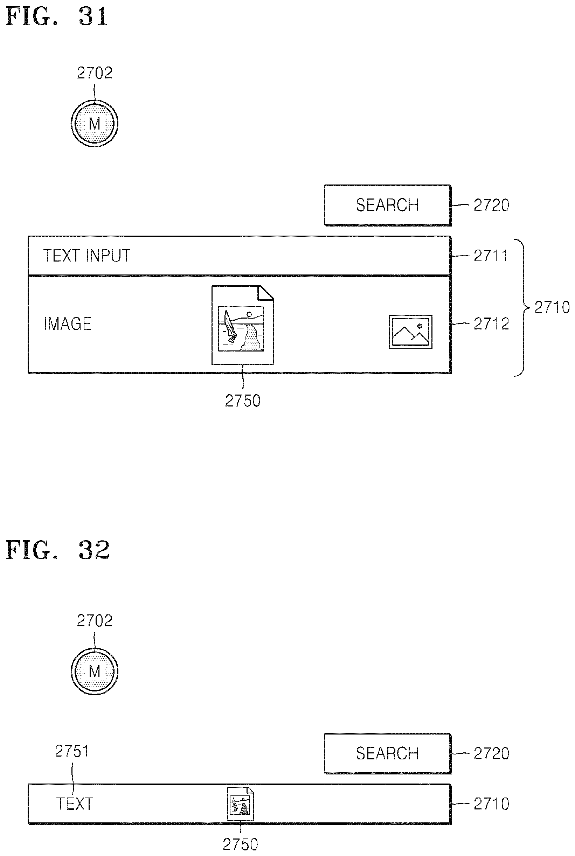

In operation S2930, the query input device may add a query type, which is to be used to perform a multimodal search, according the detected query type. Accordingly, the query input device may add a region, which receives a query component corresponding to the added query type (and which displays a display item corresponding to the previously received query component), into the query input window. Referring to FIG. 31, since the query type is added, a region in which the query input window 2710 is displayed may be enlarged. Also, a user interface 2712 for inputting an image may be displayed in a region where the query input window is enlarged. Information 2750 about the received query component, such as a preview, an icon, or a filename, may be displayed in the added region.

According to one or more exemplary embodiments, the query input window 2710 may be enlarged to include the user interface 2712 corresponding to the added query type. However, the present exemplary embodiment is not limited thereto. Also, according to one or more exemplary embodiments, a form of the query input window 2710 displayed by the query input device may not be changed. Also, an internal region of the query input window 2710 may not be divided. In this case, a plurality of query components, respectively corresponding to different query types input through the query input window 2710, may be displayed together in the query input window 2710.

According to another exemplary embodiment, the query input device may display a query input window. Here, when a search mode is the multimodal input mode, the query input window may include a region, which displays a received query component (i.e., which displays a display item corresponding to a previously received query component), and a region for receiving a query component. According to an exemplary embodiment, when the region for receiving the query component is selected, the query input device may execute an operation of receiving the query component. For example, in order to receive a query component in which a query type is voice information, the query input device may stand by in a state where a microphone is operated. The voice information may be information included in voice data. In operation S2910, the query input device may sequentially or simultaneously receive a plurality of query components corresponding to a plurality of query types through a region of the query input window that is used to receive a query component. For example, when a user writes search in red while drawing a bicycle, the query input device may receive, as a query component, sketch information indicating the bicycle drawn by the user and voice information including a keyword "red".

In operation S2920, the query input device may detect a query type of the received query component. For example, when the received query component is a file, the query input device may detect the query type of the query component according to an extension of the file. Alternatively, when an application is used for receiving the query component, the query input device may detect a query type of the query component according to the kind of the application. As another example, when a picture is taken by using a camera, the query input device may detect that a query type of a query component is an image. Alternatively, when a character included in the picture is recognized by using optical character recognition (OCR), a text may be detected as a query type. When the query type of the received query component is detected, the query input device may display the received query component (or a display item corresponding to the received query component) in a region that displays the received query component, based on the detected query type. For example, when a query type detected from a first query component is a video, the query input device may display a preview of the video in a region that displays the first query component, and when a query type detected from a second query component is a text, the query input device may display a keyword in a region that displays the second query component. Alternatively, when a query type detected from a query component is voice information, the query input device may display, in the region that displays the query component, at least one of a voice waveform, included in the voice information or corresponding to a predetermined waveform, and text converted from the voice information. The query input device may repeatedly perform operations S2910 and S2920 to receive a plurality of query components, and may display the received query components so as to enable the user to check the query components.

When the query type is detected in operation S2920, the query input device may add a query type that is to be used for a query in operation S2930. When the query input device receives an input corresponding to a search command, the query input device may generate a query including the added query type. The query input device may perform a search, based on the query including the received query components and the detected query types. The query input device may display one or more search results as a result of the search.

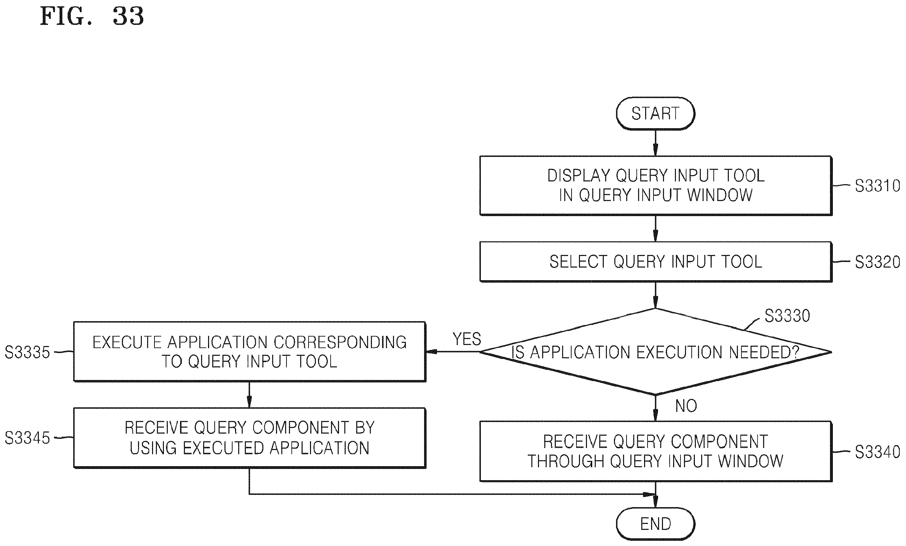

When a query type is changed, a method of receiving a query component may be changed. Also, various methods of receiving a query component may be provided for one query type. Therefore, a user interface that is provided to a user for inputting a query component may be changed or may vary depending on a query type. FIG. 33 is a flowchart illustrating a process of receiving a query, according to an exemplary embodiment.

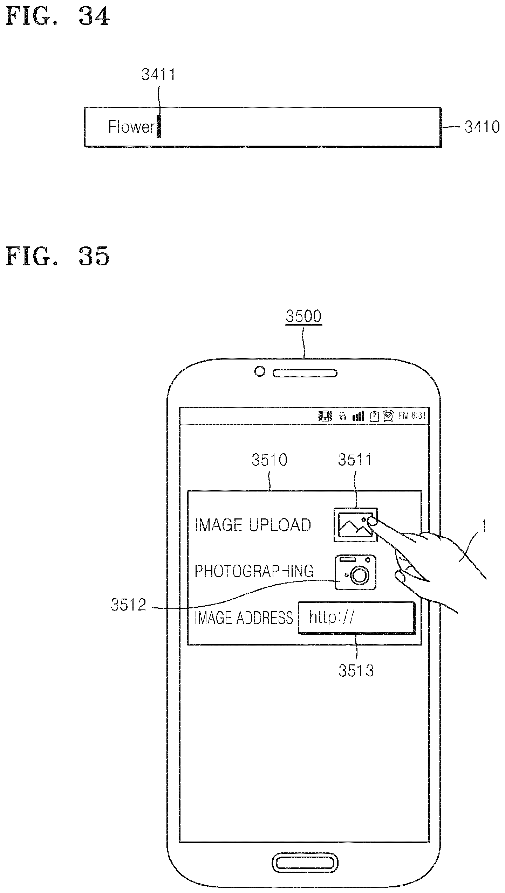

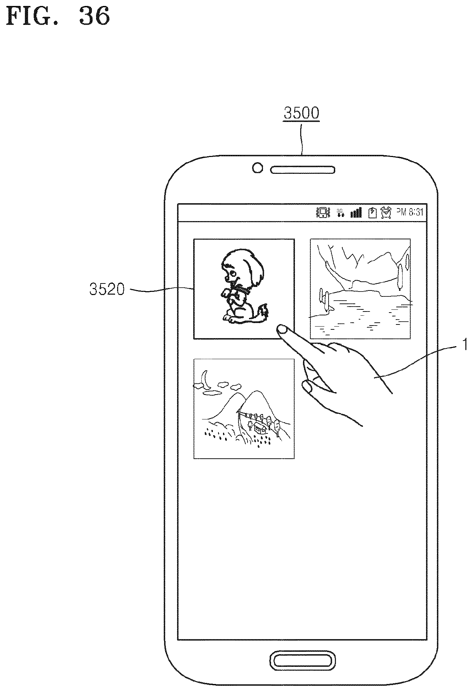

Referring to FIG. 33, in operation S3310, the query input device may display a query input tool in a query input window. Here, the query input tool denotes a user interface that is provided to a user for inputting a query component. In operation S3310, the query input device may display a query input tool according to a query type included in a query that is input through the query input window. An example of the query input tool displayed according to a query type will be described in detail below with reference to FIGS. 34 to 40.

In operation S3320, the query input device may select at least one from among a plurality of the query input tools displayed in the query input window. Specifically, in operation S3320, the query input device may receive a user input, and select a query input tool according to the received user input. The type or form of user input may vary. For example, the query input tool may be selected according to an operation in which a part of a human body, a stylus, etc., touches the query input tool displayed on the touch screen, or a mouse curser clicks the displayed query input tool.

In operation S3330, the query input device may determine whether it is to execute an application for receiving a query component, based on the selected query input tool. For example, when the selected query input tool is a text box, the query input device may determine that the query component may be directly received through the text box without executing a separate application. That is, when the separate application is not to be executed, the query input device may receive the query component through the query input window in operation S3340.

When the separate application for receiving the query component is to be executed, the query input device may execute an application corresponding to the query input tool in operation S3335. The application corresponding to the query input tool may be predetermined, or may be selected from an application list by a user. Accordingly, the query input device may receive the query component by using the executed application in operation S3345.

FIGS. 34 to 40 are exemplary diagrams illustrating a method of receiving a query component by using a query input tool displayed in a query input window, based on a query type included in a query. FIGS. 34 to 40 are merely examples for describing one or more exemplary embodiments, and it is understood that one or more other exemplary embodiments are not limited thereto.

FIG. 34 is an exemplary diagram illustrating a method of receiving a query component in which a query type is a text, according to an exemplary embodiment.

When a text mode is included in a query, the query input window may include a text box 3410, which is as illustrated in FIG. 34. When the text box 3410 is selected, a cursor 3411 indicating a position to which a text is to be input may be displayed in the text box 3410. The text may be input via a keyboard, a keypad, a writing pad to receive handwriting text, etc. Furthermore, the query input device may receive a copied text through the text box 3410 from a keyboard or a clipboard. A keyword extracted from an input text may be used as a query component in search.

According to another exemplary embodiment, the query input device may acquire a text from an image (e.g., an image that is acquired by operating a camera), by using an OCR operation. Moreover, while the query input tool for receiving a text input is provided as a text box 3410 including a cursor 3411 above, it is understood that one or more other exemplary embodiments are not limited thereto. For example, according to another exemplary embodiment, the query input tool for receiving a text input may include a writing pad to receiving handwriting text that is included in the query and, for example, subsequently converted via an OCR operation by a search engine, or which is converted by the query input device to text via an OCR operation.

FIGS. 35 to 38 are exemplary diagrams illustrating a method of receiving a query component in which a query type is an image, according to an exemplary embodiment. In FIGS. 35 to 38, a query input device 3500 is described as being a handheld device including a camera, although it is understood that one or more other exemplary embodiments are not limited thereto.

When a query received through a query input window includes an image, the query input device 3500 may display a query input window 3510 including one or more tools that are used to receive an image. The one or more tools for receiving the image may each include at least one of an image upload icon 3511, a photographing icon 3512, and an image address input box 3513.

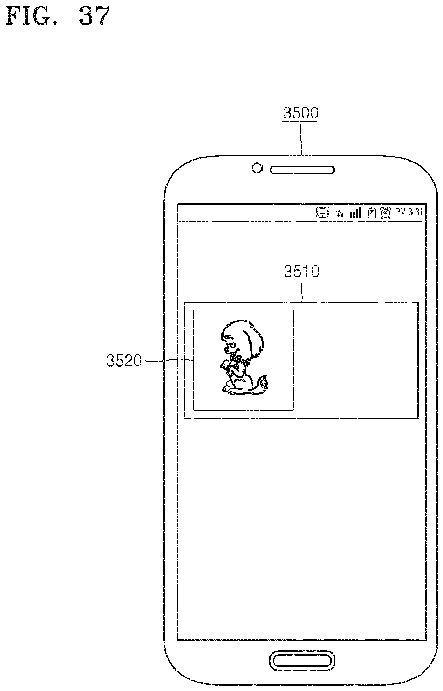

When a user 1 selects the image upload icon 3511, the query input device 3500 may operate to select an image file. For example, referring to FIG. 37, the query input device 3500 may execute a gallery application that displays a preview list of image files. When the user 1 selects at least one image 3520 from the displayed preview list by using the gallery application, the query input device 3500 may receive the selected image 3520 as a query component.

Referring to FIG. 37, when the image 3520 is selected by using the gallery application, the query input device 3500 may end, close, or hide the gallery application, and display the selected image 3520 in the query input window 3510. Alternatively, according to another exemplary embodiment, the query input device 2500 may divide a display region thereof. In this case, the query input device 3500 may display an execution screen of the gallery application in one of a plurality of divided regions, thereby enabling the user 1 to select an image.

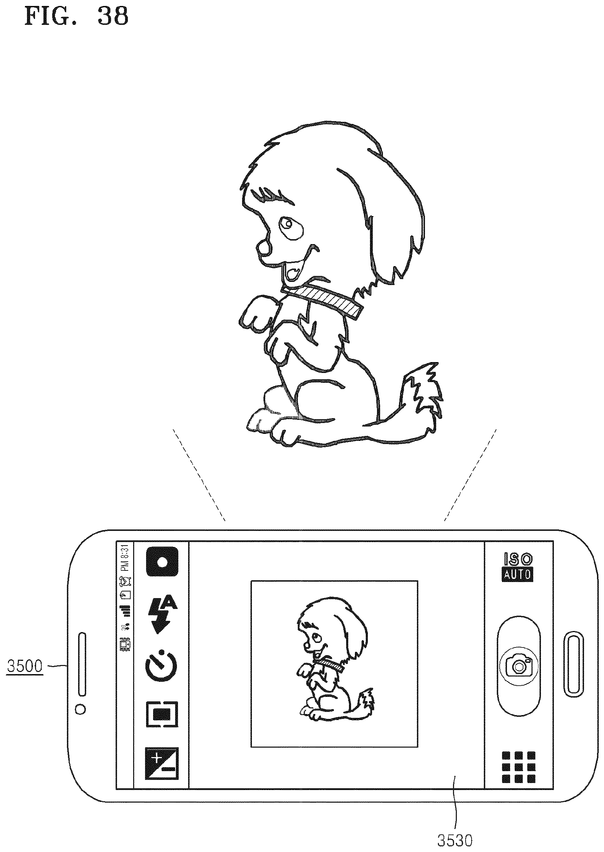

When the user 1 selects the photographing icon 3512, the query input device 3500 may execute an application 3530 that operates a camera for taking a picture, as illustrated in FIG. 38. When an image is generated by using the camera, the query input device 3500 may receive the generated image as a query component, and as illustrated in FIG. 37, the image may be displayed in the query input window 3510.

According to another exemplary embodiment, the user 1 may input an address with an image located thereat by using the image address input window 3513. An image address may be an address indicating a position of an image like a URL address, although it is understood that one or more other exemplary embodiments are not limited thereto.

In FIG. 37, it is illustrated that the image received as the query component is displayed in the query input window 3510, although it is understood that a position at which the image received as the query component is displayed may vary in one or more other exemplary embodiments.

Moreover, a method of receiving a query (in which a query type of a query component is a video) may be implemented similarly to a method of receiving an image as a query component, as described above.

When an image or a video is received as a query component, a keyword may be acquired from the image or video by using image recognition or an OCR operation. A search may be performed by using the acquired keyword. Alternatively, the query input device may compare an image itself with an index to search for a similar image.

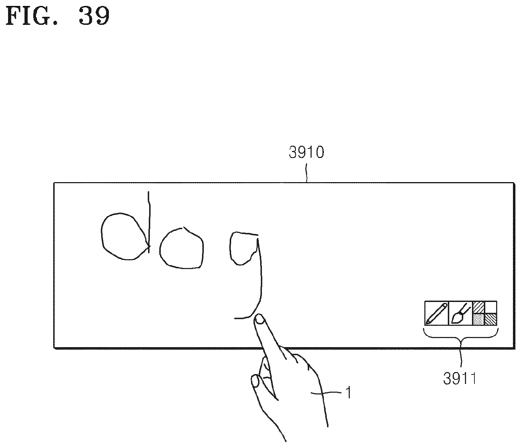

FIG. 39 is an exemplary diagram illustrating a method of receiving a query component in which a query type is sketch information, according to an exemplary embodiment.

When a query type included in a query is sketch information, a query input window 3910 may include a sketch input tool 3911 for inputting the sketch information. The sketch input tool 3911 according to an exemplary embodiment may include one or more icons for selecting at least one of a pen mode, a brush mode, a fountain pen mode, a color or thickness of a line, etc. A user 1 may set a sketch input mode by using the sketch input tool 3911, and input sketch information to a region, which receives a query component in which a query type is sketch information, by using a touch input, a mouse input, a track pad input, a gesture input, etc.

When sketch information is received, the received sketch information may be displayed in the query input window 3910. The received sketch information may be converted into a keyword, and the keyword acquired from the sketch information may be used for a search. Alternatively, the search may be performed by using a form of the sketch information itself.

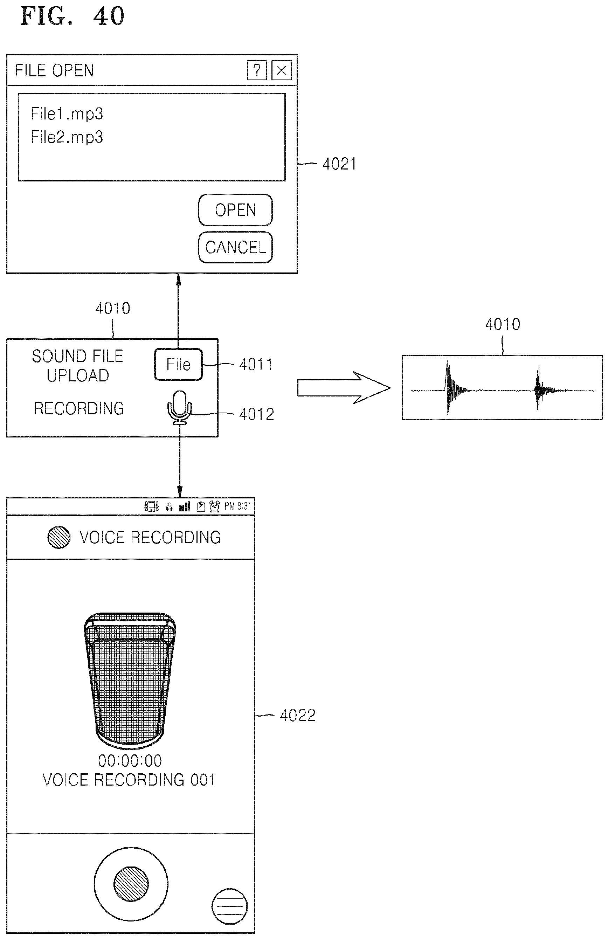

FIG. 40 is an exemplary diagram illustrating a method of receiving a query component in which a query type is audio information, according to an exemplary embodiment.

When a query type included in a query is audio information, the query input device may display a query input window 4010 that includes a tool for receiving the audio information. The tool for receiving the audio information may include, for example, at least one of a sound file upload button 4011 and an audio recording icon 4012.

When the sound file upload button 4011 is selected, the query input device may display a file selection window 4021 for selecting a sound file. A user may select a voice file (i.e., au audio file), which is to be input as a query component, by using the file selection window 4021.

Alternatively, when the audio recording icon 4012 is selected, the query input device may operate a microphone (an image of which may be included in the query input window 4010), and execute an application 4022 that records audio (i.e., voice information). The query input device may receive acquired voice information as a query component by using the executed application 4022.

When voice information is input, the query input device may display a waveform, a voice spectrum, or a filename of the voice information input to the query input window 4010.

The voice information received as the query component may be used for a music search by comparing a waveform itself of a voice with an index, or a keyword obtained through conversion using voice recognition may be used for a search.

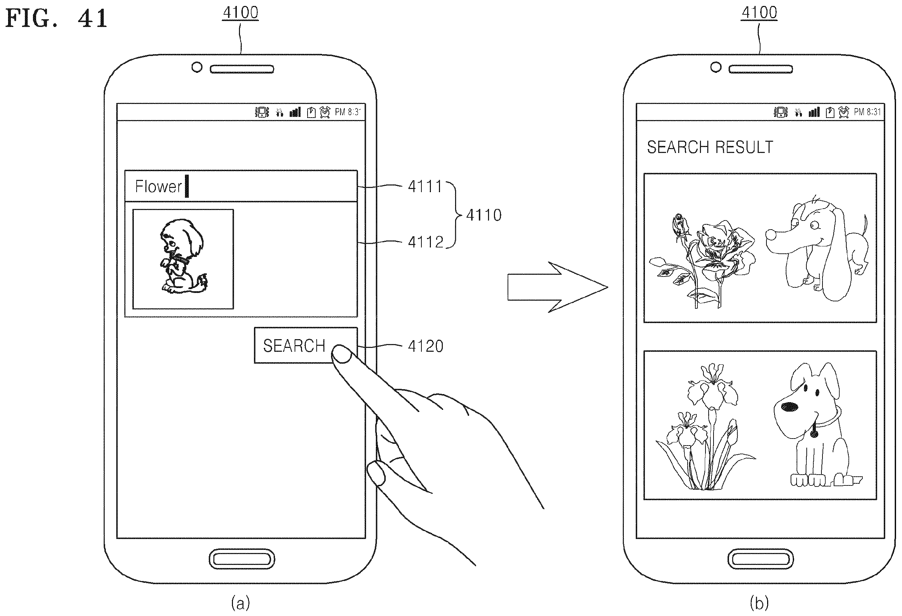

FIG. 41 is an exemplary diagram illustrating a method of receiving a query, including a plurality of query components having a plurality of query types, and displaying a search result, according to an exemplary embodiment.

When query types included in a query include a text and an image, a query input window displayed in a query input device 4100 may include a first region 4111 for inputting the text and a second region 4112 for inputting the image. As illustrated in FIG. 41 (a), when a text "Flower" and an image including a shape of a dog are received as query components, the text "Flower" may be displayed as a first display item in the region 4111, and the received image may be displayed as a second display item in the region 4112.

Here, a user may manually select the first region 4111 to put the first region 4111 in a ready state of receiving an input of the text, and may manually select the second region 4112 to place the second region 4112 in a ready state of receiving an input of the image. However, it is understood that one or more other exemplary embodiments are not limited thereto. For example, according to another exemplary embodiment, after or in response to the user inputting a first query component (e.g., text) in the first region, the second region 4112 may automatically enter the ready state of receiving an input of the second query component (e.g., image). In this regard, a controller of the query input device 4100 may determine to automatically switch from a first ready state (i.e., first state) in which the first region 4111 can receive the first query component to a second ready state (i.e., second state) in which the second region 4112 can receive the second query component. For example, if the second query component corresponds to an audio or voice information query type, the controller may perform control to automatically switch the query input device 4100 to the second ready state in which a microphone is automatically activated or operated to receive the second query component. Furthermore, if the second query component corresponds to an image query type, the controller may perform control to automatically switch the query input device 4100 to the second ready state in which a camera is automatically activated or operated to receive the second query component or in which an interface to select an image is displayed to receive the second query component.

When the ready state is automatically switched as described above, the controller may control to output an indicator of the automatic switching and/or the second ready state. For example, the indicator may include at least one of an audio indicator or output (e.g., predetermined notification sound), a visual indicator or output (e.g., a predetermined icon, a predetermined symbol, a predetermined image, etc.), an auxiliary device output (e.g., a blinking LED or an LED of a predetermined color on the query input device 4100), a vibration output, etc. In this case, the visual indicator may be displayed in the query input window or outside of the query input window in various exemplary embodiments.

Furthermore, the controller may determine to automatically switch from the first ready state to the second ready state based on determining a completion of an input of the first query component. For example, if the first query component is an image, the controller may determine to automatically switch from the first ready state to the second ready state in response to an image captured by a camera of the query input device 4100 or in response to a user selection of an image. Moreover, if the first query component is a text or a sketch, the controller may determine to automatically switch from the first ready state to the second ready state in response to a predetermined period of time elapsing from a last user input to the first region 4111 (e.g., two seconds after a last text character is input to the first region 4111).

When switching to the second ready state, the controller may also control to change a display of the query input window, a display of the second region 4112, or a display of a graphical user interface. In this regard, the change of the display may be based on the query type corresponding to the second query component or the second region 4112. According to another exemplary embodiment, the controller may control to display the second region 4112 or a user interface to receive an input of the second query component in response to switching to the second ready state.

When a user 1 selects a search button 4120 in a state where the received text and the received image are displayed, as illustrated in FIG. 41 (b), the query input device 4100 may display a search result that is obtained by performing a multimodal search. In FIG. 41, an image including both a flower and a dog are displayed as the search result.

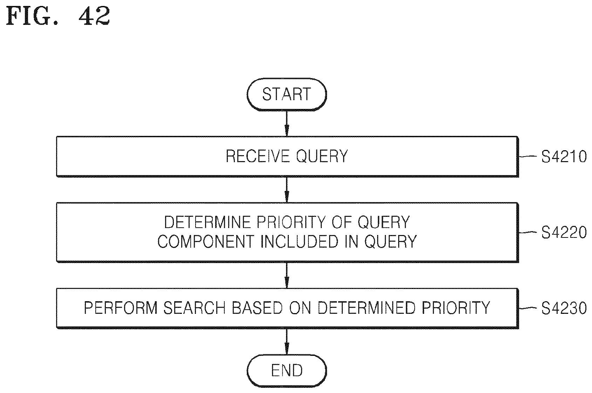

FIG. 42 is a flowchart illustrating a process of performing a search, according to an exemplary embodiment.

The query input device according to an exemplary embodiment may receive a query in operation S4210, and determine a priority of a query component included in the received query in operation S4220. In operation S4220, the query input device may determine the priority of the query component, based on a query type of the query component. For example, when a text, an image, and voice information are included in the query, the priority of the query component may be determined in the order of the text, the voice information, and the image.

The priority of the query component may be variously determined. For example, a user may set priorities of a plurality of query types. According to an exemplary embodiment, when priorities of query types are set, a priority may be determined based on a query type of a received query component. According to another exemplary embodiment, a priority of a query component may be determined based on an order in which the query component is received through the query input window. However, this is merely an example for describing an exemplary embodiment, and it is understood that one or more other exemplary embodiments are not limited thereto.

In operation S4230, a search may be performed based on the determined priority. For example, a first search may be performed based on a text included in a query, and then, by using voice information that is a query component having a lower priority than that of the text, a second search may be performed on a result of the first search performed based on the text.

A priority of a query component may be determined by the query input device. Alternatively, when a search is performed by using the search engine server including the search engine, the priority of the query component may be determined by the search engine server.

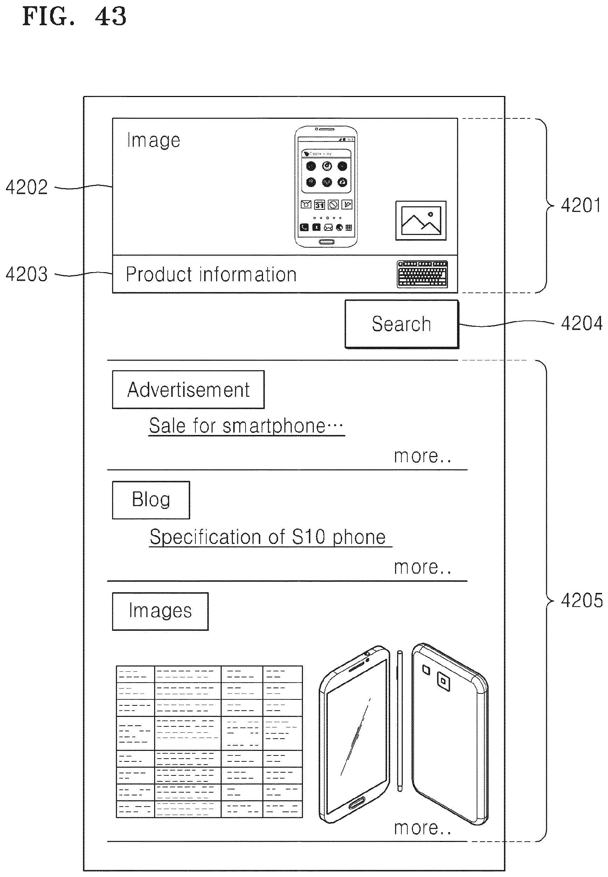

FIG. 43 is an exemplary diagram illustrating a result obtained by performing a multimodal search, according to an exemplary embodiment.

According to an exemplary embodiment, the query input device may display a query input window 4201. The query input window 4201 may include at least one query component input region which displays a received query component (i.e., a display item corresponding to the received query component). According to an exemplary embodiment, the query input device may display a query component that is received, based on a priority of a query type of the received query component. Referring to FIG. 43, when a priority of an image query type is higher than that of a text query type, an image input region 4202 may be displayed above a text input region 4203.

A query component is input by using the query input window 4201, and then, when a user selects a search button 4204, a result of a search performed by using the query component may be displayed in a search result display region 4205. Here, among a plurality of query components, a query component having a highest priority may be determined as a main query component, and a query component having a lowest priority may be determined as a sub query component. Among search results based on the main query component, information selected by the sub query component may be displayed in a search result region. For example, referring to FIG. 43, among pieces of information about a smartphone included in an image, advertisement information including product information of the smartphone, a blog, and an image may be displayed in a search result region 4205.

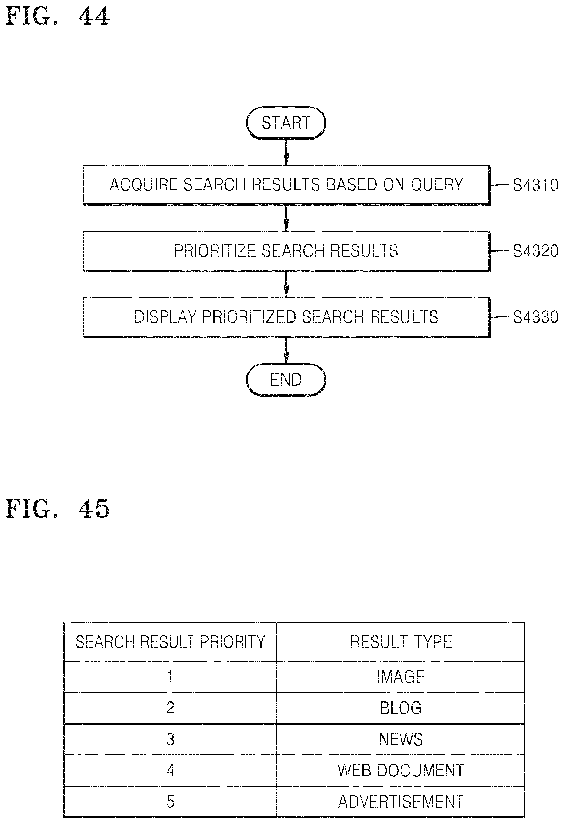

FIG. 44 is a flowchart illustrating a process of displaying a search result, according to another exemplary embodiment.

In operation S4310, a plurality of search results may be acquired (i.e., determined or obtained) based on a query received through a query input window. Here, the acquired plurality of search results may be prioritized in operation S4320. For example, priorities of the acquired plurality of search results may be determined based on a degree that matches a query. As another example, the priorities of the acquired plurality of search results may be determined based on a time when information including a corresponding search result is generated.

In operation S4330, the prioritized search results may be displayed in the query input window, based on priorities thereof. Here, the search results may be displayed in another device instead of the query input device. For example, the search results may be displayed in another device included in a home network connected to the query input device.

FIG. 45 is an exemplary diagram illustrating priorities of search results according to another exemplary embodiment. According to the present exemplary embodiment, a search result may be prioritized based on a type thereof. A priority of a search result may be set by a user, or may be determined based on a user's feedback or usage history. For example, when the user does not have interest in an advertisement, the user may directly set the advertisement search result type to a low priority, or when the number of times advertisement information is selected is relatively small (or below a predetermined value), the query input device may set the advertisement search result type to a relatively low priority. For example, referring to FIG. 45, a priority based on a result type may be determined in the order of an image, a blog, news, a web document, and an advertisement. Herein, it is described that a priority of a search result is determined by the query input device. However, it is understood that one or more other exemplary embodiments are not limited thereto. For example, according to another exemplary embodiment, when a search is performed by using an external search engine server, the priority of the search result may be determined by the external search engine server.

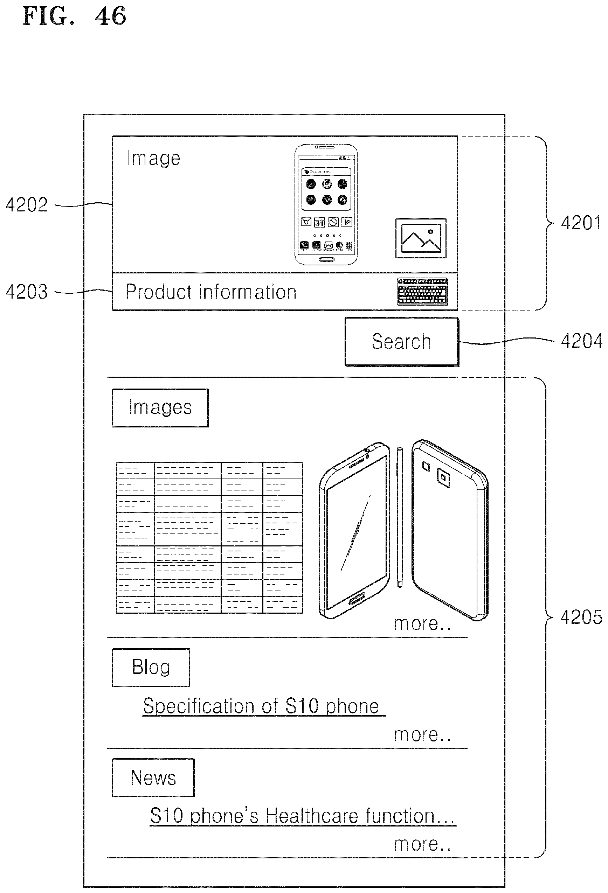

FIG. 46 is an exemplary diagram illustrating a result obtained by performing a multimodal search, according to another exemplary embodiment. In the exemplary embodiment of FIG. 46, the same query as that of the exemplary embodiment of FIG. 43 is input. A query input window 4201, including an image input region 4202 and a text input region 4203, and a search button 4204 may be displayed.

Moreover, the exemplary embodiment of FIG. 46 represents a case in which a priority of a search result is set as illustrated in FIG. 45. Even when the same query is input, a search result may be differently displayed depending on a priority of the search result. That is, search results may be displayed in the order of an image, a blog, and news in a result display region 4205-1, based on priorities of the search results.

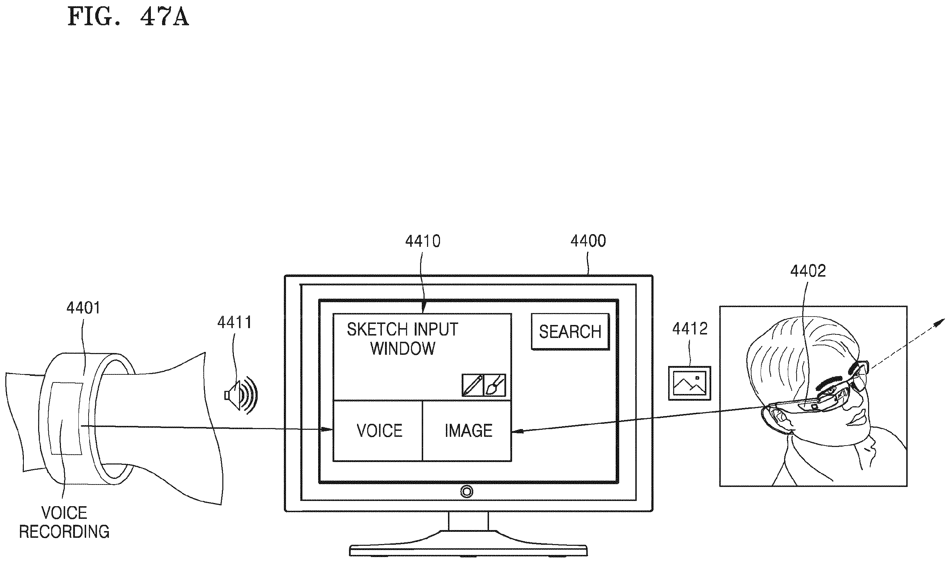

FIG. 47A is an exemplary diagram illustrating a method of receiving a query by using a plurality of devices, according to an exemplary embodiment. According to the present exemplary embodiment, query components included in a query may be input by using a plurality of devices. In FIG. 47A, it is illustrated that a query input device 4400 is a connected TV, although it is understood that the query input device 4400 is not limited to the form illustrated in FIG. 47A in one or more other exemplary embodiments, and may instead be implemented as a PC, a smartphone, a smart device, a laptop computer, a portable multimedia player, a tablet device, a netbook, a workstation, etc.

When query types included in a query are sketch information, voice information, and an image, the query input device 4400 may display a query input window 4410 for inputting the sketch information, the voice information, and the image.

The query input device 4400 may request voice information 4411 from a smart watch 4401 communicable with the query input window 4401. The smart watch 4401 may denote an embedded system watch equipped with various operations in addition to those of general clocks. For example, the smart watch 4401 may perform a calculation operation, a translation operation, a recording operation, a communication operation, etc. The smart watch 4401, which receives a request for the voice information 4411 from the query input device 4400, may operate a microphone included in the smart watch 4401 to generate the voice information 4411, and transmit the generated voice information 4411 to the query input device 4400. The query input device 4400 may receive the voice information 4411, transmitted from the smart watch 4401, as a query component. The smart watch 4401 may communicate with the query input device 4400 by using wired communication or wireless communication such as Bluetooth, Wi-Fi direct, near field communication (NFC), infrared data association (IrDA), radio frequency (RF) communication, wireless local area network (LAN), etc.

Moreover, the query input device 4400 may request an image 4412 from smart glasses 4402 communicable with the query input device 4400. The smart glasses 4402 denote a wearable device equipped with a head-mounted display (HMD). The smart glasses 4402 may perform a calculation operation, a translation operation, a recording operation, a communication operation, etc. The smart glasses 4402, which receive a request for the image 4412 from the query input device 4400, may generate the image 4412 captured by a camera included in the smart glasses 4402. The smart glasses 4402 may transmit the generated image 4412 to the query input device 4400. The query input device 4400 may receive the image 4412, transmitted from the smart glasses 4402, as a query component. The smart glasses 4402 may communicate with the query input device 4400 by using wired communication or wireless communication such as Bluetooth, Wi-Fi direct, NFC, IrDA, RF communication, wireless LAN, etc.

The smart glass 4402 may include a camera for tracking the user's eyes. When the user watches a certain portion of an entire screen of a TV, the smart glass 4402 may determine a region currently watched by the user by using the camera for tracking the user's eyes and may transfer an image of the region to the query input device 4400.

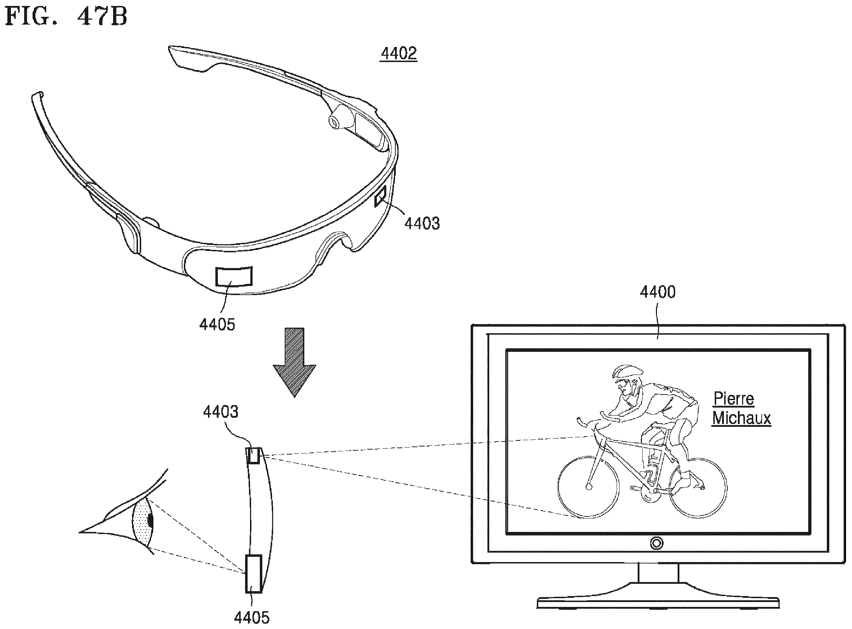

FIG. 47B is an exemplary diagram illustrating a method in which a smart glass (e.g., smart glasses) according to an exemplary embodiment acquires from an entire screen of a TV an image of a region watched by a user. Referring to FIG. 47B, the smart glass 4402 may acquire an image at a position watched by the user. FIG. 47B shows an exemplary embodiment when the user watches a bicycle displayed on a TV screen.

A pupil tracking camera 4405 may track a pupil direction of the user to determine a direction in which the user's eyes look. A processor included in a glass (e.g., glasses) may receive from the pupil tracking camera 4405 information indicating a view direction of the user and adjust a direction of a front camera 4403 based on the received information. Therefore, the front camera 4403 may be synchronized with the view direction of the user. That is, a direction of the front camera 4403 and a direction in which the user's eyes look are the same. When the direction of the front camera 4403 is adjusted, the front camera 4403 may output an image of the adjusted direction to the processor.

The front camera 4403 may acquire an image which is located in a view direction tracked by the pupil tracking camera 4405. In other words, the front camera 4403 may capture an image in the same direction as the view direction of the user. In FIG. 47B, a case where the front camera 4403 is pointing toward the bicycle in the TV screen is illustrated.

The smart glass 4402 may acquire a bicycle image on the TV screen and transmit the bicycle image to the query input device 4400. The query input device 4400 may receive the bicycle image transmitted from the smart glass 4402 and receive a query including the bicycle image, thereby performing a search.

Moreover, the query input device 4400 may directly receive sketch information by using a query input tool output to the query input device 4400. The query input device 4400, which has received voice information, an image, and sketch information, may perform a search based on a query including the voice information, the image, and the sketch information.

The smart watch 4401 and the smart glasses 4402 of FIGS. 47A and 47B may be replaced with other devices communicable with the query input device 4400 in one or more other exemplary embodiments.

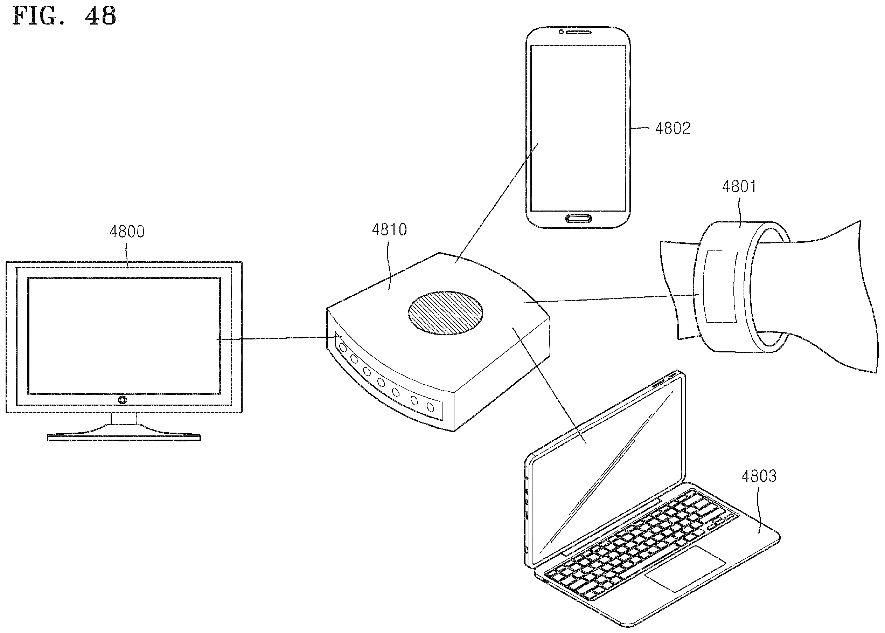

FIG. 48 is an exemplary diagram illustrating a method of receiving a query component by using a plurality of devices, according to another exemplary embodiment.

According to the present exemplary embodiment, the query input device 4800 may receive a query component, which is to be added to or included in a query, by using a device that is connected to the query input device 4800 over a network. Referring to FIG. 48, the query input device 4800 may search for a plurality of devices 4801 to 4803 that are connected to the query input device 4800 through a gateway 4810, in order to select one or more devices from which a query component is to be provided. Here, the query input device 4800 may select the device from which the query component is to be provided based on a query type of the query component. For example, when a query type of a query component to be received is voice information, the query input device 4800 may select a device including a voice input operation from among the devices 4801 to 4803.

According to an exemplary embodiment, the query input device 4800 may broadcast a request for a query component. The query input device 4800 may receive respective device profiles of the devices 4801 to 4803 from the devices 4801 to 4803 in response to the request. Here, each of the device profiles may include information about one or more operations provided by a corresponding device. The query input device 4800 may select a device that provides a query component, based on the received device profiles.

Alternatively, when the gateway 4810 manages device profiles of devices connected to the gateway 4810, the gateway 4810 may select a device, which provides a query component, in response to a request. When the gateway 4810 selects a device that provides a query component, the gateway 4810 may transmit a request for the query component to the selected device.

According to another exemplary embodiment, the query input device 4800 may broadcast a request including information about a query type. The devices 4801 to 4803, which have received the request including the information about the query type, may determine whether it is possible to provide a query component having the query type included in the request. A device, which provides the query component having the query type included in the request among the devices 4801 to 4803, may transmit a response to the request to the gateway 4810 or to the query input device 4800.

When two or more devices are selected by the query input device 4800 or the gateway 4810, the query input device 4800 may display a list of the selected devices. A user may select a device from which a query component is to be input, from the displayed list of the devices.

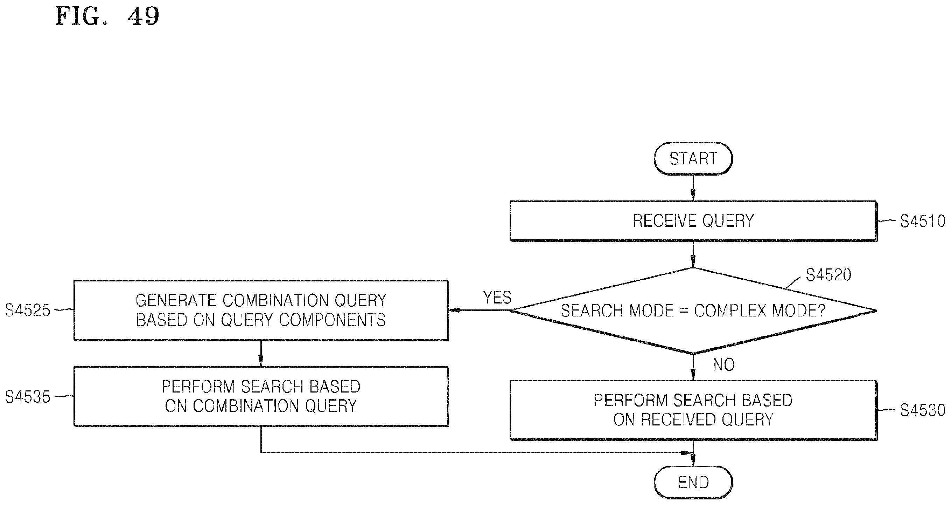

FIG. 49 is a flowchart illustrating a process of performing a search, according to an exemplary embodiment.

Referring to FIG. 49, when a query is received in operation S4510, the query input device according to the present exemplary embodiment may determine whether a search mode when a query is received is the multimodal input mode (i.e. "complex") in operation S4520. Here, operation S4510 denotes that the query input device receives the query input to a query input window according to a search performance command. When the search mode is determined as a single mode search in operation S4520, the query input device may perform a search based on a query type included in the query in operation S4530.

When the search mode is determined as the multimodal input mode in operation S4520, the query input device may generate a combination query based on a plurality of query components in operation S4525. Here, the combination query denotes that query components having a plurality of query types are combined. According to one or more exemplary embodiments, the query components may be variously combined. For example, the query components may be simply combined. In detail, for example, when a text "bag" and a voice "price" are input as query components, a query may be composed of a keyword expression "bag price". As another example, when the user draws two wheels on a query input window with a touch pen and says "bicycle" to input a voice signal (i.e., audio signal), a query may be composed of, or include, the keyword expression "bicycle with two wheels". As another example, when the user draws an apple on the query input window with the touch pen and says "red" to input a voice signal (i.e., audio signal), a query may be composed of, or include, a keyword expression "red apple". As another example, when the user photographs a bag with a camera and inputs an image of the photographed bag on the query input window, a query may be composed of, or include, a keyword expression "3000 won bag" or "3000 dollar bag". As another example, the combination query may include a keyword or a main feature (for example, a feature included in an image) that is added into a query component. Furthermore, as another example, the combination query may include extension keywords generated from the query components. Moreover, as another example, the combination query may be characterized in that the query components are prioritized based on a priority of a query type. In operation S4525, the query input device may extract a relation between the plurality of query types included in the query, and generate the combination query, based on the extracted relation. In operation S4535, the query input device may perform a search based on the combination query that is generated in operation S4525.

Here, operations S4525, S4535, and S4530 may be performed by an external server instead of the query input device.

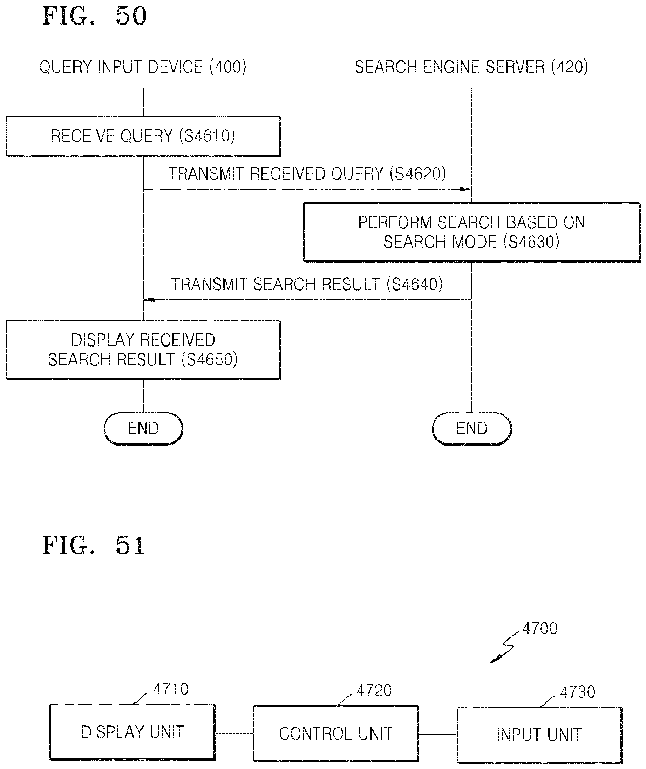

FIG. 50 is a flowchart illustrating a process of performing a search, according to an exemplary embodiment.

In operation S4610, the query input device 400 according to the present exemplary embodiment may receive a query through a displayed query input window.

In operation S4620, the query input device 400 may transmit the received query to the search engine server 420. Here, when a search mode is a multimodal search, the query transmitted to the search engine server 420 may be a combination query in which query components having a plurality of query types are combined. According to one or more exemplary embodiments, the query components may be variously combined. For example, the query components may be simply combined. In detail, for example, when a text "bag" and a voice "price" are input as query components, a query may be composed of a keyword expression "bag price". As another example, the combination query may include a keyword or a main feature (for example, a feature included in an image) that is added into a query component. Furthermore, as another example, the combination query may include extension keywords generated from the query components. Moreover, as another example, the combination query may be characterized in that the query components are prioritized based on a priority of a query type. According to an exemplary embodiment, the query transmitted to the search engine server 420 may include information indicating a search mode.

In operation S4630, the search engine server 420 may perform a single search or a multimodal search according to the search mode, for processing the received query. In operation S4640, the search engine server 420 may transmit a search result, which is selected in S4630, to the query input device 400.

FIG. 51 is a block diagram illustrating a structure of a query input device 4700 according to an exemplary embodiment.

A query input device 4700 according to an exemplary embodiment may include a display 4710, a controller 4720, and an input device 4730 (e.g., input unit).

The display 4710 may display a query input window. The display 4710 may display various pieces of information in addition to a query input. The query input device 4700 may include two or more the displays 4710 depending on an implementation type. The display 4710 may include a display device such as a liquid crystal display (LCD), a light-emitting diode (LED) display, a cathode ray tube (CRT) display, a plasma display panel (PDP), an organic LED (OLED) display, an active-matrix OLED (AMOLED) display, a thin-film-transistor (TFT) display, etc. Also, the display 4710 may include a touch sensor and a touch screen having a layered structure depending on an implementation type. When the display 4710 performs a display operation and an input operation such as a touch screen, the display 4710 may perform an operation of the input device 4730 and/or the input device 4730 may be implemented as the display 4710. Also, the input device 4730 may be implemented to include the display 4710.

According to an exemplary embodiment, when the search mode is a multimodal search mode, the display 4710 may display a query input window. The query input window denotes an interface through which a query including a plurality of query types is received. Alternatively, when the search mode is a single search mode, the query input device 4700 may display a single query input window. The single query input window denotes a query input window through which a query including only one query type is received.

The input device 4730 may receive a query, including a plurality of query components corresponding to a plurality of query types, through the query input window displayed by the display 4710 based on a user input. The input device 4730 may receive a query component, such as a text or sketch information, by using a keyboard, a keypad, a virtual keypad, a track pad, a writing pad, etc. Alternatively, the query input device 4700 may receive a query component, such as an image, voice information, or a video, to obtain or generate a query according to a user input.

The controller 4720 may control the elements of the query input device 4700. The controller 4720 may include a central processing unit (CPU), a read-only memory (ROM) which stores a control program, and a random access memory (RAM) that stores a signal or data input from the outside of the query input device 4700 or is used as a memory area in work performed by the query input device 4700. The CPU may include one or more processors such as a single core, a dual core, a triple core, or a quad core. The CPU, the ROM, and the RAM may be connected to each other through an internal bus.

The controller 4720 may acquire at least one search result for the received query. When the controller 4720 includes a search engine, the controller 4720 may directly select at least one search result for the query. When the controller 4720 does not include the search engine, the controller 4720 may transmit the query to a search engine server including the search engine, and acquire at least one search result from the search engine server. The controller 4720 may control the display 4710 to display the at least one acquired search result. The display 4710 may display the acquired at least one search result according to a control by the controller 4720.

Moreover, the controller 4720 may select a plurality of query types which are to be selected or used for a query. The query input window displayed by the display 4710 may receive a query input according to the selected query types. Also, as in the above-described exemplary embodiment, the query input window displayed by the display 4710 may be differently displayed depending on the selected query types.

Furthermore, according to an exemplary embodiment, the display 4710 may display a search mode selection object for selecting a search mode. The input device 4730 may receive a user input for the search mode selection object. Here, when the user input is an input that switches the search mode to the multimodal input mode, the controller 4720 may switch the search mode to the multimodal input mode. When the search mode is switched to the multimodal input mode, the display 4710 may change the query input window to a query input window including a plurality of input modes. According to an exemplary embodiment, the query input window may include regions respectively corresponding to a plurality of query types.

Also, the display 4710 may display a query type list. According to an exemplary embodiment, when the search mode is the single mode, the display 4710 may display a single query type list, and when the search mode is the multimodal input mode, the display 4710 may display a multimodal query type list. The controller 4720 may determine at least one query type, included in a query, from the query type list displayed by the display 4710. Here, in order to determine at least one query type, the input device 4730 may receive an input that drags and drops a target from the query type list to a region in which the query input window is displayed or is to be displayed.

Moreover, according to an exemplary embodiment, the controller 4720 may detect a query type of a received query component. The query input window displayed by the display 4710 may include a region that displays the received query component (i.e., a display item corresponding to the received query component), and a region that receives a query component. The display 4710 may display the received query component in a region corresponding to the received query component, based on the detected query type.

Further, the query input window displayed by the display 4710 may include at least one query input tool for inputting a query component corresponding to each query type.

Also, the controller 4720 may convert a text, included in a search result, into a voice, or convert a voice (i.e., audio) into a text.

According to an exemplary embodiment, after or in response to the user inputting a first query input to the query input window, the controller 4720 may determine to automatically switch from a first ready state (i.e., first state) in which the first query component can be received to a second ready state (i.e., second state) in which the second query component can be received. For example, if the second query component corresponds to an audio or voice information query type, the controller 4720 may control to automatically switch the query input device 4700 to the second ready state in which a microphone is automatically activated or operated to receive the second query component. Furthermore, if the second query component corresponds to an image query type, the controller 4720 may control to automatically switch the query input device 4700 to the second ready state in which a camera is automatically activated or operated to receive the second query component or in which an interface to select an image is displayed to receive the second query component.

When the ready state is automatically switched as described above, the controller 4720 may control to output an indicator of the automatic switching and/or the second ready state. For example, the indicator may include at least one of an audio indicator or output (e.g., predetermined notification sound), a visual indicator or output (e.g., a predetermined icon, a predetermined symbol, a predetermined image, etc.), an auxiliary device output (e.g., a blinking LED or an LED of a predetermined color on the query input device 4700), a vibration output, etc.

Furthermore, the controller 4720 may determine to automatically switch from the first ready state to the second ready state based on determining a completion of an input of the first query component. For example, if the first query component is an image, the controller 4720 may determine to automatically switch from the first ready state to the second ready state in response to an image captured by a camera of the query input device 4700 or in response to a user selection of an image. Moreover, if the first query component is a text or a sketch, the controller 4720 may determine to automatically switch from the first ready state to the second ready state in response to a predetermined period of time elapsing from a last user input to the a region of the query input window corresponding to the first query component or first query type.

When switching to the second ready state, the controller 4720 may also control to change a display of the query input window, a display of one or more regions of the query input window, or a display of a graphical user interface. In this regard, the change of the display may be based on the query type corresponding to the second query component. According to another exemplary embodiment, the controller 4720 may control to display a user interface to receive an input of the second query component in response to switching to the second ready state.

It is understood that the form of the query input window may vary and is not limited those described above.

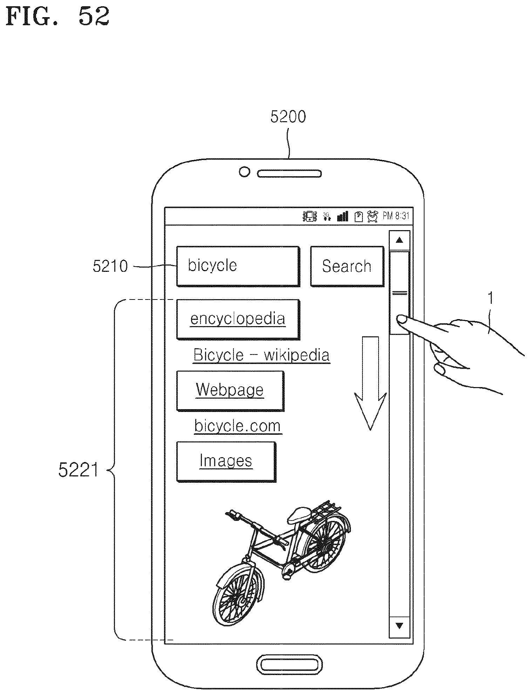

FIGS. 52 to 57 are exemplary diagrams illustrating a method of performing a multimodal search, according to another exemplary embodiment.

Referring to FIG. 52, a query input device 5200 may receive, generate, or obtain a query "bicycle", and display a search result 5221 including encyclopedia information, webpage information, and an image that are searched based on the query. Here, a user 1 may scroll a screen displayed by a display, to check a search result that is not currently displayed by the display.

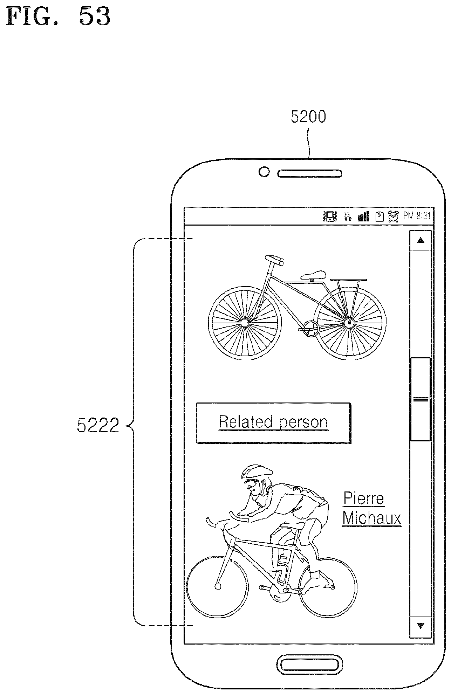

Referring to FIG. 53, a screen is scrolled, and thus, a plurality of search results 5222 that are not previously displayed by the display may be displayed by the display. In this case, since the screen is scrolled, a query input window 5210 may not be displayed on the screen.

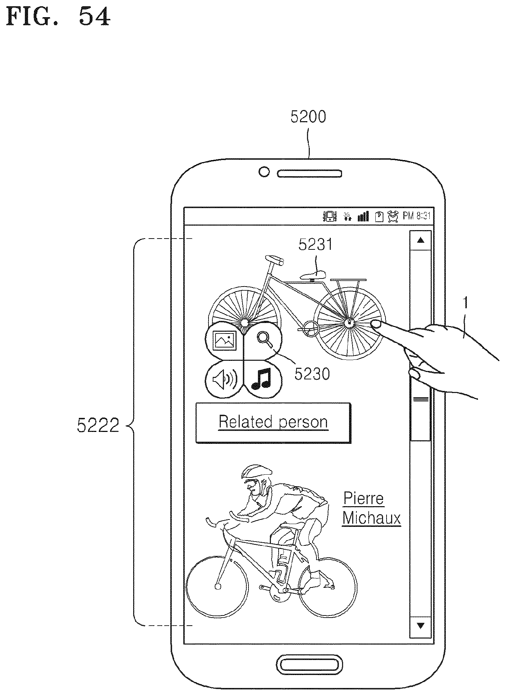

The user 1 may select an image 5231 included in the search results 5222. For example, referring to FIG. 54, the user 1 may select a bicycle image 5231 from among the search results 5222. Here, the user 1 may select the image 5231 by using a touch screen or a mouse, although it is understood that one or more other exemplary embodiments are not limited thereto. When the image 5231 is selected, the query input device 5200 may display a query type list near the selected image 5231. Referring to FIG. 54, the query input device 5200 may display a floating icon 5230 near the selected image 5231. The floating icon 5230 may correspond to at least one query type.

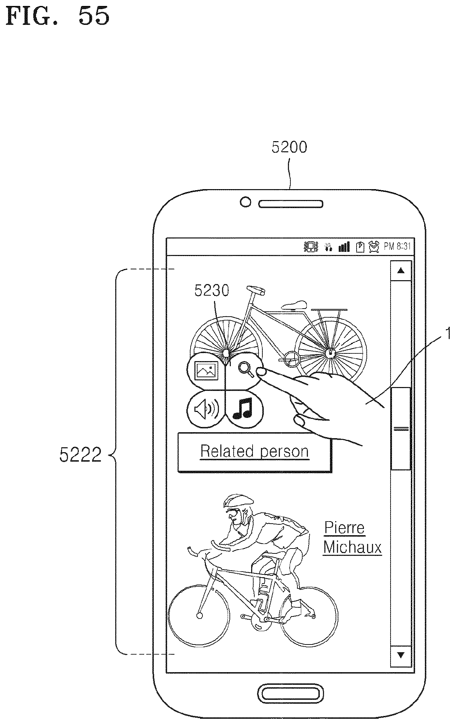

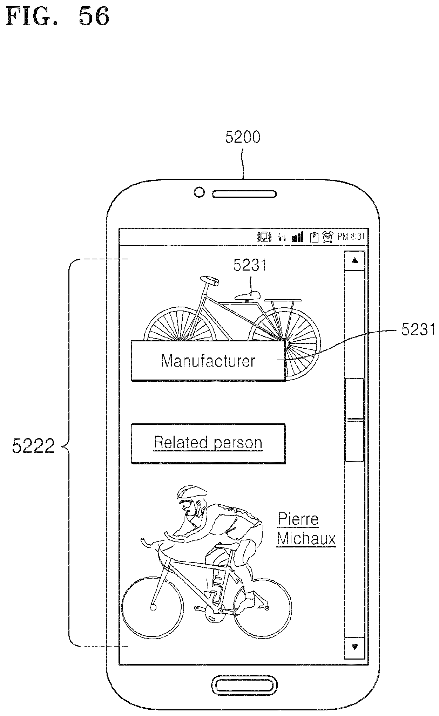

Referring to FIG. 55, the user 1 may select the displayed floating icon 5230. Referring to FIG. 56, the floating icon 5230 is selected, and thus, the query input device 5200 may display a query input region 5231 for inputting a query type corresponding to the floating icon 5230. The query input device 5200 may receive a query component through the query input region 5231.

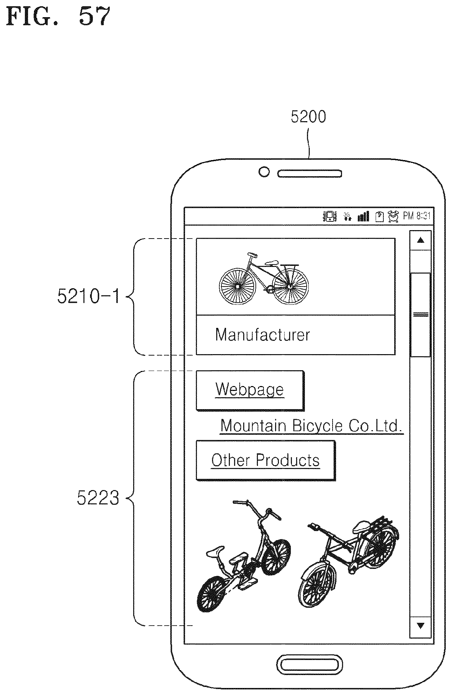

Referring to FIG. 57, the query input device 5200 may perform a search based on a selected search result and a query 5210-1 that includes a query component received through the query input region 5231. As illustrated in FIG. 57, based on a bicycle image and a text "manufacturer", the query input device 5200 may display, in the result display region 5223, a bicycle manufacturer homepage included in an image and information about other products manufactured by the bicycle manufacturer. That is, the query input device 5200 receives a search result selected from a search result display region and receives each query component by using the query input region 5231, and thus, in the exemplary embodiment of FIG. 56, it may be described that a query component is received by using the search result display region and the query input region 5231 as query input windows.

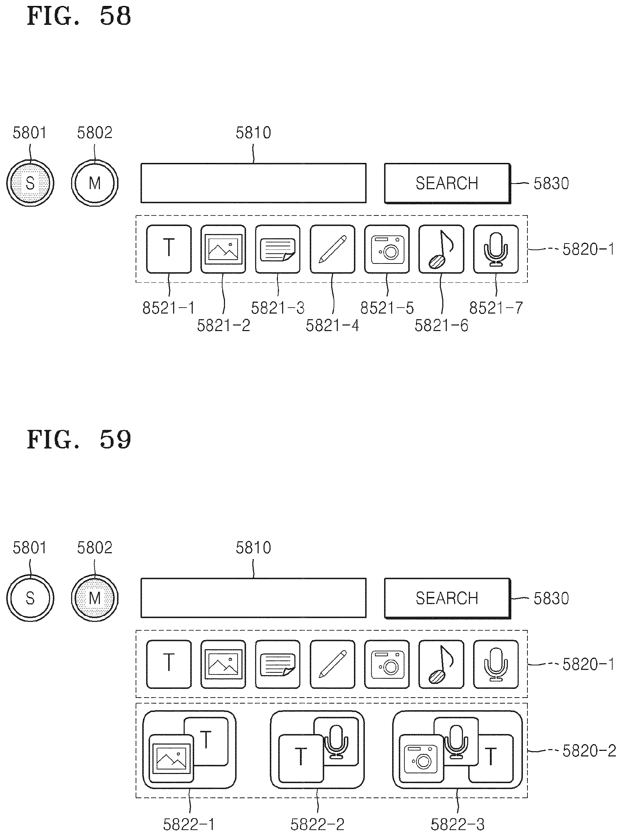

FIG. 58 is an exemplary diagram illustrating a method of displaying a query type list, according to another exemplary embodiment.

According to the present exemplary embodiment, the query input device may display a single mode selection object 5801, a multimodal input mode selection object 5802, a query input window 5810, a search button 5830, and a single query type list 5820-1. As illustrated in FIG. 58, the single query type list 5820-1 may include a plurality of icons that respectively correspond to a plurality of query types (each icon corresponding to one query type).

The query input device may determine a query type, through which the query input window 5810 is received, by using an icon included in the single query type list 5820-1. For example, when a text icon 5821-1 is selected, the query input device may display a user interface for inputting a text to the query input window 5810. Alternatively, when an image icon 5821-2 is selected, the query input device may display a user interface for inputting an image to the query input window 5810. Furthermore, when a document icon 5821-3 is selected, the query input device may display a user interface for inputting a document to the query input window 5810. Moreover, when a sketch icon 5821-4 is selected, the query input device may display a user interface for inputting sketch information to the query input window 5810. Also, when a camera icon 5821-5 is selected, the query input device may execute a camera application, and display an image, acquired by using the camera application, in the query input window 5810. Further, when a music icon 5821-6 is selected, the query input device may perform a music search based on voice information which is acquired by using a microphone. Alternatively, when a recording icon 5821-7 is selected, the query input device may operate the microphone, and acquire voice information by using the microphone.

FIG. 59 is an exemplary diagram illustrating a method of displaying a query type list, according to another exemplary embodiment.

When the multimodal input mode selection object 5802 is selected, the query input device may set a search mode to the multimodal input mode. According to the present exemplary embodiment, when the search mode is the multimodal input mode, the query input device may display a multimodal query type list 5820-2. In this case, the multimodal query type list 5820-2 may include a combination icon in which a plurality of icons are combined. The combination icon may indicate a multimodal query type by using an icon included in the combination icon. Also, according to an exemplary embodiment, the query input device may indicate priorities of query types, based on a display of an icon. For example, a combination icon 5822-1 of an image and a text illustrated in FIG. 59 indicates that a priority of the image is higher than that of the text. Also, a combination icon 5822-2 of a text and a voice indicates that a priority of the text is higher than that of the voice. Also, a combination icon 5822-3 of a camera, a voice, and a text indicates that priorities of the query types are in the order of the camera, the voice, and the text.

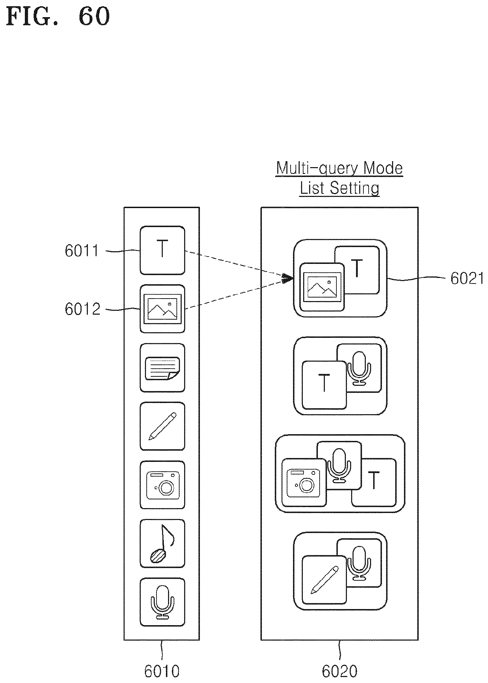

FIG. 60 is an exemplary diagram illustrating a method of generating a multimodal query type list, according to an exemplary embodiment.

According to an exemplary embodiment, the query input device may generate a plurality of combination icons 6020 corresponding to a plurality of query types by using a plurality of icons 6010 respectively corresponding to a plurality of query types (each icon corresponding to one query type). For example, when a user selects a text icon 6011 and an image icon 6012 from among the icons 6010, the query input device may generate a combination icon 6021 in which the text icon 6011 is combined with the image icon 6012. In this case, the user may also set a priority for the query types (e.g., according to an order of selecting the icons or by modifying the combination icon 6021) and the combination icon 6021 may reflect the set priority. Alternatively, the priorities may be pre-set or predetermined.

According to an exemplary embodiment, when the search mode is the multimodal search mode, the query input device may display a multimodal query type list including the combination icons 6020 set by the user.

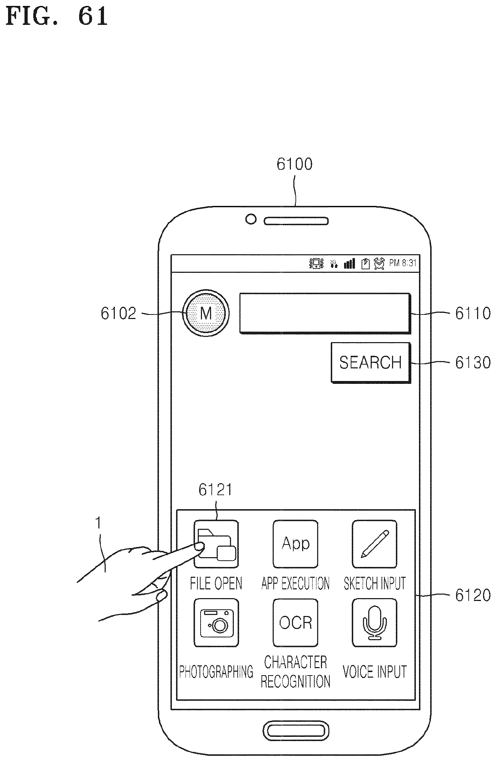

FIGS. 61 to 65 are exemplary diagrams illustrating a method of performing a multimodal search, according to another exemplary embodiment.

According to the present exemplary embodiment, a query input device 6100 may display an indicator 6102 that indicates the search mode as the multimodal input mode. Also, the query input device 6100 may display a query input window 6110 and a search button 6130.

Furthermore, according to the present exemplary embodiment, the query input device 6100 may display a collection 6120 of query input tools for inputting a query component when the query input window 6110 is selected. Alternatively, according to another exemplary embodiment, the query input device 6100 may display the collection 6120 of the query input tools for inputting a query component when a menu button included in the query input device 6100 is selected. The query input tools may be included in the query input window 6110.

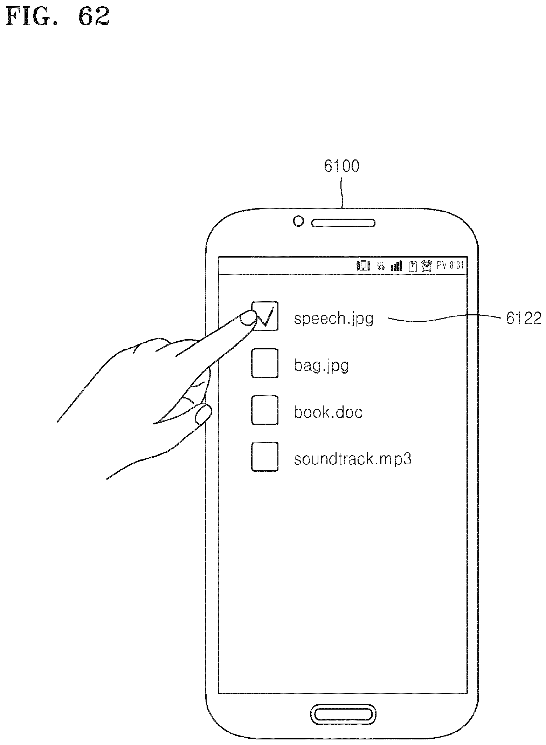

As illustrated in FIG. 61, when a user 1 selects a file open icon 6121 from the collection 6120 of the query input tools, the query input device 6100 may display a user interface for selecting a file. FIG. 62 is an exemplary diagram illustrating a user interface for selecting a file.

As illustrated in FIG. 62, when the user 1 selects a file 6122, the query input device 6100 may receive the selected file 6122 as a query component. Also, the query input device 6100 may detect a query type corresponding to the selected file 6122. For example, as illustrated in FIG. 62, when an extension of the selected file 6122 is jpg, the query input device 6100 may determine a query type, corresponding to the selected file 6122, as an image.

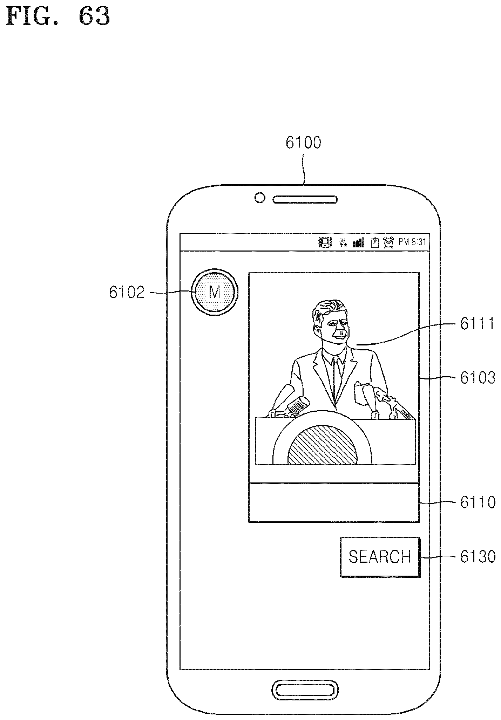

The query input device 6100 may display a received query component (i.e., a display item corresponding to the received query component) according to the detected query type. For example, referring to FIG. 63, the query input device 6100 may display a received image 6111 in a region 6103 that displays a query component. In FIG. 63, it is illustrated that the region 6103 that displays the query component is combined with a query input window 6110 including a region that receives the query component, although it is understood that the form of the region 6103 displaying the query component may vary in one or more other exemplary embodiments. For example, the region 6103 may be included in the query input window 6110, or may be disposed in a separated space. When a plurality of query components are sequentially or simultaneously received through the query input window 6110, the received plurality of query components may be accumulated or displayed together in the region 6103, or displayed in separate regions.

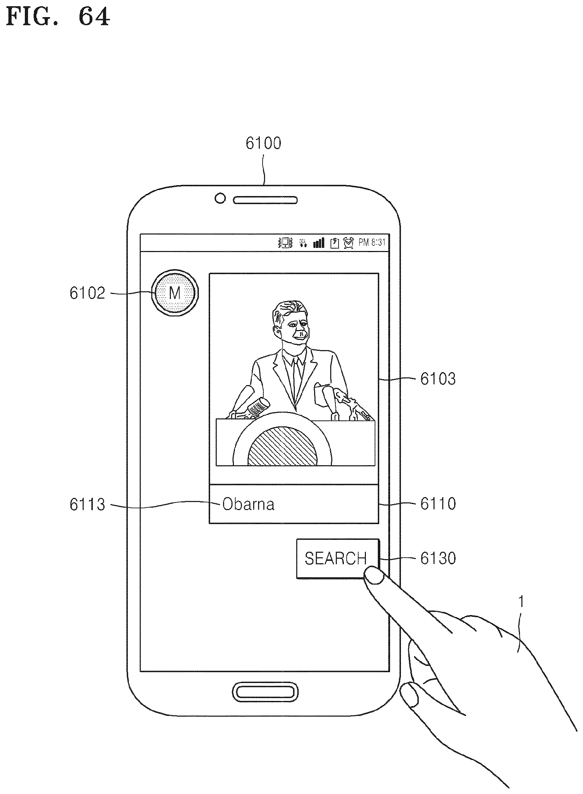

Moreover, the query input device 6100 may receive an additional query component through a region that receives a query component included in the query input window 6110. For example, referring to FIG. 64, a user 1 may input a text "Obama" to the query input window 6110.

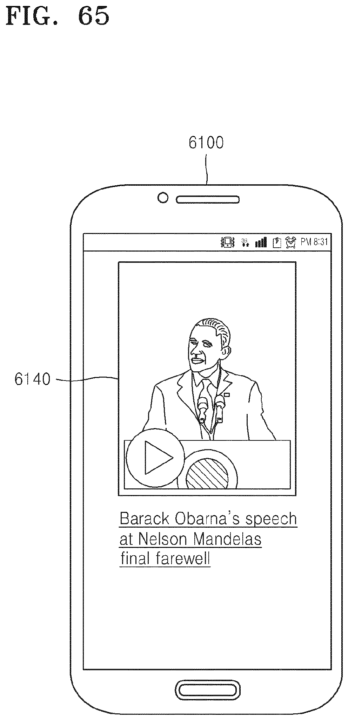

When the user 1 selects a search button 6130, the query input device 6100 may perform a search based on the accumulated query component(s) and the detected query type(s). For example, referring to FIGS. 64 and 65, the query input device 6100 may display a video 6140, in which Obama gives a speech, as a search result on the basis of an image 6102 of a speaking scene and a text 6113 "Obama".

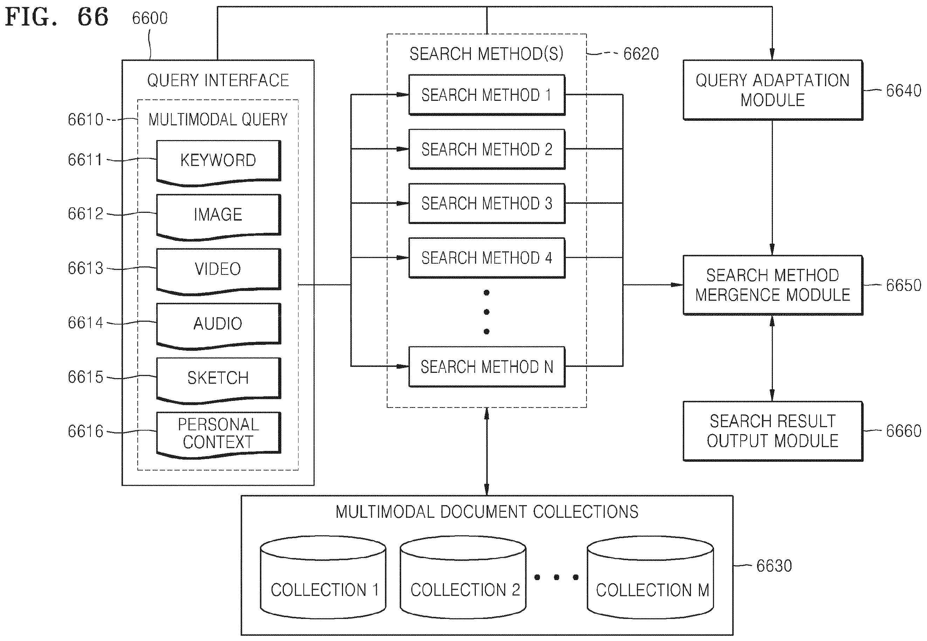

FIG. 66 is a block diagram illustrating a framework for performing a multimodal search based on a query having a plurality of query types, according to an exemplary embodiment. In detail, FIG. 66 is a block diagram illustrating a framework for a query-adaptive multimodal search.

A query interface 6600 may receive a combination query 6610 in which a plurality of query components are combined. The plurality of query components may include at least one of a keyword 6611, an image 6612, a video 6613, a voice 6614, sketch information 6615, context information 6616, etc. Here, the context information 6616 denotes information, which clarifies a query, like a user's current state or personal history and preference information. For example, the context information 6616 may include a priority of a query type.

Moreover, the query interface 6600 may include a unit or device for receiving the combination query 6610. For example, the query interface 6600 may include at least one of a keyboard for receiving the keyword 6611, a camera for acquiring the image 6612 or the video 6613, a microphone for acquiring the voice 6614, a touch screen for acquiring the sketch information 6615, a sensor for acquiring the context information 6616, etc.

A search method(s) 6620 denotes an algorithm(s) that is used to match a query with a database so as to select documents depending on a suitability of the documents. For example, in a video search system, while a division search method is processing query text keywords and is matching the query text keywords with voice recognition information, a thumbnail image of a video may be matched with visual content by a single search method. The combination query 6610 may be processed by a plurality of the search methods 6620, thereby acquiring a search result.

A database that matches a query may include a document collection(s) 6630. The database includes pieces of information that are to be searched. Documents included in the database may have different modalities. Each of the documents denotes a unit of information included in the database. For example, each document may include one page on the Web, one screen in a video corpus, or one image of photo collection.

A query adaptation module 6640 may adjust a processing order of the search method(s) 6620 of processing a query. For example, when desiring to search for a photo of a famous person in a news video, weight may be given to a text search method, but when desiring to search for a sports scene, weight may be given to an example-based image search method.

A search method mergence module 6650 may merge search results obtained by the plurality of search methods 6620. The merged search results may be output through a search result output module 6660.

At least one of the search methods 6620, the database, the query adaptation module 6640, the search method mergence module 6650, and the search result output module 6660 may be applied to an external device. The external device may be a cloud computer or a server.

The external device (e.g., cloud computer) may store the search methods 6620 and the database and may include the query adaptation module 6640, the search method mergence module 6650, and the search result output module 6660. The external device may perform a search by using a query received from a query input device and output a search result to the query input device.

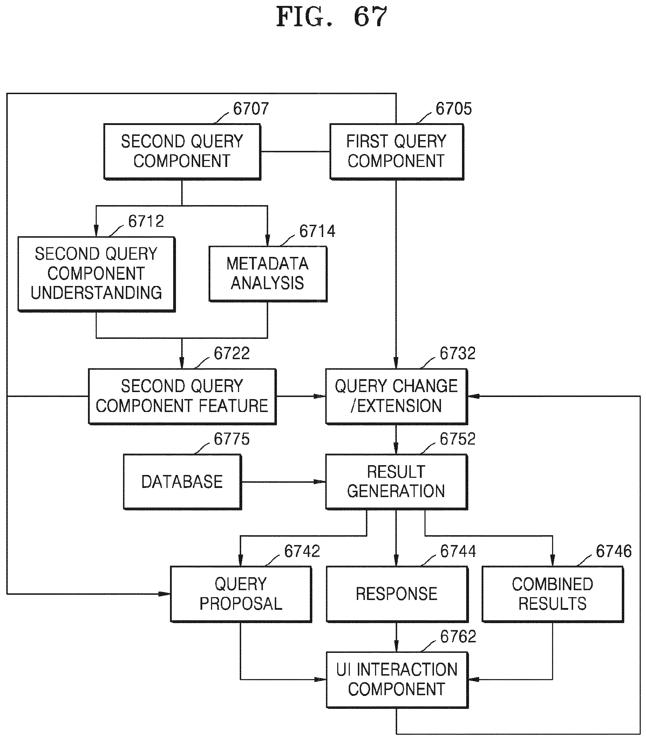

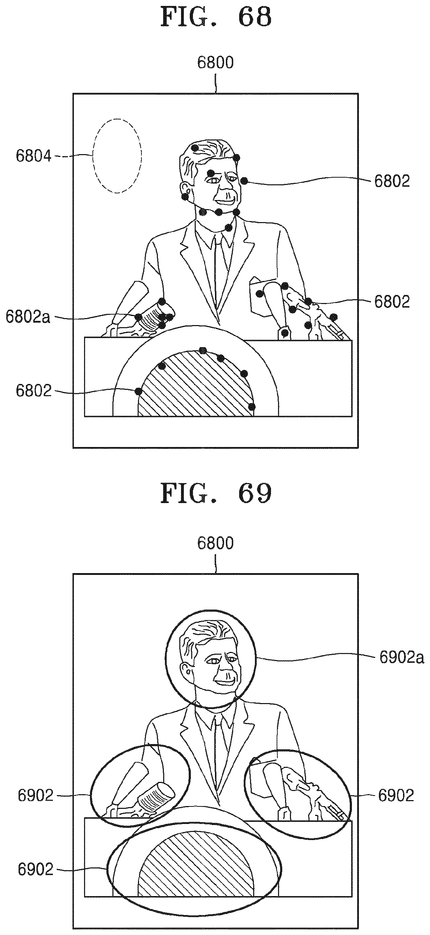

FIG. 67 is a structure diagram schematically illustrating systems and/or processors according to one or more exemplary embodiments. Referring to FIG. 67, when a search mode is a multimodal search mode, the query input device may perform a search, based on query types of received query components. For example, when the query input device receives a first query component 6705 of a text query type and a second query component 6707 of an image query type, the query input device may perform a search based on a keyword corresponding to the first query component 6705 (i.e., a text) and an input quantum (i.e. an image) of the second query component 6706. To process the second query component 6707, the query input device may identify features of the second query component 6707 by using a second query component understanding component 6712. The second query component understanding component 6712 may be referred to as a second query component processing component. Alternatively, when a query type of the second query component 6707 is an image, the second query component understanding component 6712 may be referred to as an image processing component. Features which are extracted from the second query component 6707 by the second query component understanding component 6712 may be allocated a descriptor keyword by a second query component feature component 6722. For example, when the query type of the second query component 6707 is an image query type, the second query component understanding component 6712 may identify the features of the second query component 6707 (i.e., an image). In this case, the features of the second query component 6707 may include at least one of an image text feature and an image vision feature. Also, the second query component feature component 6722 may allocate the description keyword to at least one of image text features and image vision features of the identified second query component 6707. An example in which the query type of the second query component 6707 is the image query type will be described in detail with reference to FIGS. 68 to 72.

A metadata analysis component 6714 may identify metadata associated with the second query component 6707. When the second query component 6707 includes a file, the metadata may be built into the file by an operating system (OS) like a title or annotations stored in the file or may include information which is stored along with the file. The metadata may include a text, which is input for identifying a query component to be used for a search, in an URL path or a relevant text such as a text which is located in a webpage or a text-based document or is located near corresponding information for information (for example, an image or the like) built therein. The second query component feature component 6722 may identify keyword features based on an output of the metadata analysis component 6714.

The second query component feature component 6722 may identify the first query component 6705 and arbitrary additional features, and then a resulting query may be optionally changed or extended by a component 6732. A query change or extension may be performed by the metadata analysis component 6714 and the second query component feature component 6722 based on the features extracted from the metadata. Alternatively, the query change or extension may be performed based on a feedback received by using an UI interaction component 6762. Also, the feedback may include query proposals 442 based on response results for a current or previous query, in addition to an additional query input received by a user. Also, an optionally extended or changed query may be used to generate (6752) a response result. In FIG. 67, the result generation operation (6752) may identify by using one or more query response documents in a database 6675, which includes features and quanta for pieces of data (for example, a document). The database 6775 may include an inversion index or another arbitrary type of storage format for identifying response results based on the query.

According to one or more exemplary embodiments, the result generation operation 6762 may generate one or more type results. Depending on the case, the most promising result may be identified along with a high-priority result response or a small number of high-priority result responses. The promising result may be provided as a response 6744. As an alternative, a listing of prioritized response results may be used. The listing may be provided by prioritizing a plurality of combined results 6746. An interaction (including an operation of displaying results and an operation of receiving query components) with the user may be performed by the UI interaction component 6762.

FIGS. 68 to 72 are exemplary diagrams illustrating a process of extracting image features of a query component having an image query type, according to one or more exemplary embodiments.

In FIG. 68, a method of processing an image (i.e., a query component having an image query type) 6800 by using an operator algorithm for identifying a plurality of points of interest (POIs) 6802 is illustrated. The operator algorithm may include an arbitrary available algorithm for identifying the POIs 6802 in the image 6800. In one or more exemplary embodiments, the operator algorithm may be different from the Gaussians algorithm or the Raplace algorithm. In one or more exemplary embodiments, the operator algorithm may analyze the image 6800 two-dimensionally. Optionally, when the image 6800 is a color image, the image 6800 may be changed to a gray scale.

The POIs 6802 may include a section 6902, a region, a group of pixels, and a feature in the image 6800 as illustrated in FIG. 69, in addition to an arbitrary point of the image 6800 as illustrated in FIG. 68. Hereinafter, the POIs 6802 and a plurality of the sections 6902 may be referred to as POIs 6802, but the POIs 6802 may include all of the POIs 6802 and the sections 6902. In one or more exemplary embodiments, the POIs 6802 may include a special or identifiable feature of the image 6802 which is located in a stabilized region of the image 6802. For example, the POIs 6802 may be located in a region of the image 6800 having sharp features representing a high contrast between the features illustrated in 6802a and 6902a. On the other hand, a POI may not be located in a section (i.e., a region having no special features or contrast) of a certain color or a gray scale referred to by 6804.

The operator algorithm may identify, for example, an arbitrary number of POIs 6802, such as thousands of POls, in the image 6800. The POIs 6802 may be a combination of the points 6802 and the sections 6902 in the image 6800, and the number of the POIs may be changed or vary depending on a size of the image 6800. The second query component processing component 6712 may calculate a metric for each of the POIs 6802 and prioritize the POIs 6802 according to the calculated metric. The metric may include a signal intensity or a signal-to-noise ratio (SNR) of the image 6800 in the POIs 6802. The second query component processing component 6712 may select a subset of the POIs 6802 for additional processing based on a priority. According to one or more exemplary embodiments, hundred POIs 6802 having a highest SNR may be selected. The number of selected POIs 6802 may be changed or vary. According to one or more exemplary embodiments, a subset may not be selected and all POIs may be targets for additional processing.

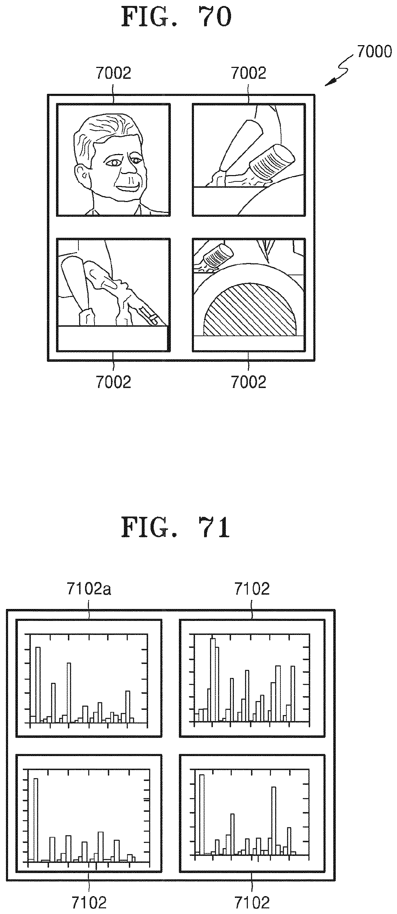

As illustrated in FIG. 70, a set 7000 of patches 7002 corresponding to the selected POIs 6802 may be identified. Each of the patches 7002 may correspond to a selected single POI 6802. The patches 7002 may include a region of the image 6800 including the POIs 6802. Sizes of the patches 7002 which are to be acquired from the image 6800 may be determined based on an output from the operation algorithm for each of the selected POIs 6802. The patches 7002 may have different sizes. Also, regions of the image 6800 included in the respective patches 7002 may overlap each other. Shapes of the patches 7002 may be arbitrary shapes including a square shape, a rectangular shape, a triangular shape, a circular shape, an elliptical shape, etc. The shape of each of the patches 7002 may be a square shape or may vary from one patch to the next.

The patches 7002, as illustrated in FIG. 70, may be normalized. According to one or more exemplary embodiments, the patches 7002 may be normalized to have the same size. The patches 7002 may be normalized by increasing or decreasing at least one of sizes and resolutions of thereof. However, the present exemplary embodiment is not limited thereto. For example, the patches 7002 may be normalized through one or more other operations such as application of a contrast increasing operation, application of a spot removing operation, application of a sharpening operation, and application of a gray scale.

According to one or more exemplary embodiments, a descriptor may be determined for each of the normalized patches. The descriptor may be a description of a patch that may be added as a feature used for an image search. The descriptor may be determined by calculating a statistic of pixels in each of the patches 7002. According to one or more exemplary embodiments, the descriptor may be determined based on a statistic of grayscale slopes of the pixels in each of the patches 7002. The descriptor may be visually expressed as a histogram for each of the patches 7002, like a plurality of descriptors 7102 illustrated in FIG. 71 (the patches 7002 illustrated in FIG. 70 may correspond to the descriptors 7102 which are similarly arranged in FIG. 71). However, the present exemplary embodiment is not limited thereto. For example, a descriptor may be described as a multi-dimensional vector representing a pixel grayscale statistic of pixels in a patch. A T2S2 36-dimensional vector may be an example of a vector representing the pixel grayscale statistic.

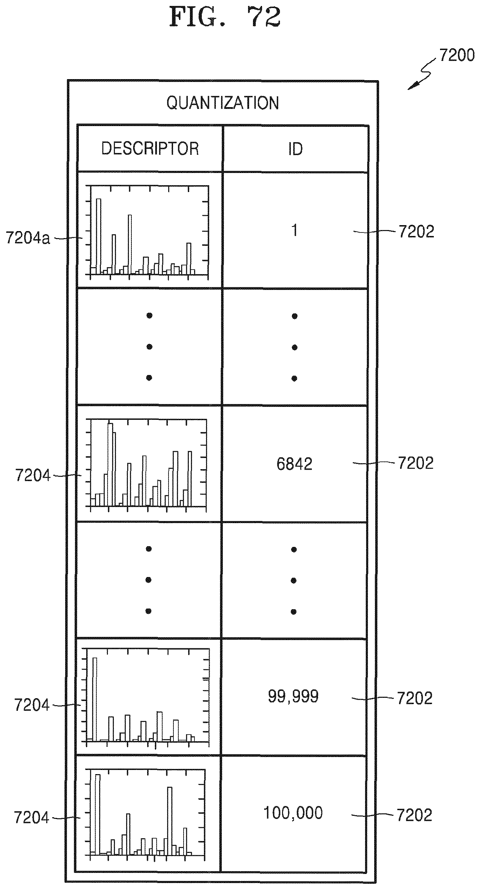

As illustrated in FIG. 72, a quantization table 7200 may be used for correlating a descriptor 7202 with each of the descriptors 7102. The quantization table 7200 may include an arbitrary table, an index, a chart, or other data structure used to map the descriptors 7102 to the descriptor keyword 7202. The quantization table 7200 having various forms is well known to one of ordinary skill in the art. According to one or more exemplary embodiments, the quantization table 7200 may be generated by processing a number of images to identify the descriptors 7102 for the respective images. Subsequently, the identified descriptors 7102 may be statistically analyzed for identifying clusters or groups of similar descriptors 7102 or descriptors 7102 having statistically similar values. For example, values of variables in T2S2 vectors are similar. A representative descriptor 7204 of each cluster may be selected and may be allocated a corresponding descriptor keyword 7202 in addition to a position in the quantization table 7200. A plurality of the descriptor keywords 7202 may include an arbitrary desired indicator for identifying the representative descriptor 7204 corresponding thereto. For example, the descriptor keywords 7202 may include integer values, alphabetical characters, numerical values, symbols, texts, or a combination thereof as illustrated in FIG. 72. According to one or more exemplary embodiments, the descriptor keywords 7202 may include a sequence of characters for identifying a descriptor keyword in relation to a non-text-based search mode. For example, all descriptor keywords are the first four characters of keywords and may include a series of three integers and an underline character subsequent thereto. Also, such an initial sequence may be used to identify a descriptor keyword in relation to an image.

The representative descriptor which is the most approximately matched with each descriptor 7102 may be identified in the quantization table 7200. For example, a descriptor 7102a illustrated in FIG. 71 may most nearly correspond to a representative descriptor 7202a of the quantization table 7200 illustrated in FIG. 9. For example, the descriptor 7102a illustrated in FIG. 71 may most nearly correspond to a representative descriptor 7204a of the quantization table 7200 illustrated in FIG. 72. Therefore, the descriptor keywords 7202 for the respective descriptors 7102 may be relevant to the image 6800. For example, the descriptor 7102a may correspond to a descriptor identifier 7202a "1". The descriptor keywords 7202 associated with the image 6800 may differ, and one or more of the descriptor keywords 7202 may be relevant to the image 6800 a plurality of times. For example, the image 6800 may include descriptor keywords "1, 2, 3, 4" or "1, 2, 2, 3". According to one or more exemplary embodiments, in order to consider characteristics such as a change in an image, the descriptor 7102 may be mapped to two or more descriptor identifiers 7202 by identifying two or more representative descriptors 7204, which are the most approximately matched with the descriptor 7102, and the descriptor keyword 7202 for each of the two or more representative descriptors 7204. Based on this, content of the image 6800 having a set of the identified POIs 6802 may be expressed by a set of the descriptor keywords 7202.

According to one or more exemplary embodiments, another image-based search method may be integrated into a search scheme. For example, a face recognition method may provide an image search based on another method. As described above, identities of persons in an image may be determined by using the face recognition method in addition to or instead of identifying descriptor keywords as described above. An identity of a person in an image may be used for complementing a search query. Alternatively, when metadata for various persons are included in a library, a query may be complemented by using stored metadata.

The above description may provide a description for adapting search schemes for an image query type to another search scheme such as a text. Similar adaptation may be performed for search methods (for example, an audio query type) for different query types. According to one or more exemplary embodiments, an audio-based search method having an arbitrary type may be used. A search using a query component having an audio query type may use features of one or more types which are used to identify audio files having similar characteristics. As described above, audio features may be relevant to descriptor keywords. The descriptor keywords may have a format indicating a keyword being associated with an audio search like a case of making last four characters of a keyword correspond to four numbers succeeding a hyphen.

In the above-described exemplary embodiments, it is described that a query input window displays a display item corresponding to a query component (i.e., query input). Here, it is understood that the display item may be the query component itself or a representation of the query component (such as a waveform, a thumbnail image, a preview image, etc.). Furthermore, according to one or more exemplary embodiments, a first display item corresponding to a first query type and a second display item corresponding to a second query type may be displayed such that the first query type and the second query type are distinguishable from each other.

One or more exemplary embodiments may be implemented in the form of a storage medium that includes computer executable instructions, such as program modules, being executed by a computer. Computer-readable media may be any available media that may be accessed by the computer and includes volatile media such as RAM, nonvolatile media such as ROM, and removable and non-removable media. In addition, the computer-readable media may include computer storage media and communication media. Computer storage media includes the volatile media, non-volatile media, and removable and non-removable media implemented as any method or technology for storage of information such as computer readable instructions, data structures, program modules, or other data. The medium of communication may be computer-readable instructions, and other data in a modulated data signal such as data structures, or program modules, or other transport mechanism and includes any information delivery media. Examples of the computer storage media include ROM, RAM, flash memory, CD, DVD, magnetic disks, or magnetic tapes. It is further understood that one or more of the above-described components and elements of the above-described apparatuses and devices may include hardware, circuitry, one or more processors, etc.

It should be understood that exemplary embodiments described herein should be considered in a descriptive sense only and not for purposes of limitation. Descriptions of features or aspects within each exemplary embodiment should typically be considered as available for other similar features or aspects in other embodiments.

## Claims

1. A method, comprising:
receiving, through a search bar, a first user input;
obtaining an image including a plurality of products as a first search result corresponding to the first user input;
displaying, on a display of an electronic device, the obtained image;
receiving a second user input for selecting a partial region (2501) of the displayed image as a region of a product of the plurality of products included in the displayed image, wherein the second user input comprises at least one of a drag input or a touch input with respect to the displayed image;
obtaining the partial region (2501) of the displayed image, based on the second user input;
displaying a plurality of floating icons indicating a plurality of query types on the displayed image, in response to the partial region (2501) being obtained;
receiving a third user input for selecting an icon corresponding to a voice query type from among the plurality of query types;
displaying a query input window including a voice recording icon, in response to the third user input for selecting the icon corresponding to the voice type being received;
receiving a voice input of inquiring a price, in response to a fourth user input for selecting the voice recording icon being received;
sending, toward an external search server, a search request based at least on the obtained partial region (2501) of the displayed image and the voice input of inquiring the price;
receiving, from the external search server, a search result based at least on the search request; and
displaying, on the display, the search result received from the external search server,
wherein the displayed search result comprises:
an image of a search result product corresponding to the product comprised in the obtained partial region (2501), and
a price for the search result product.

2. The method of claim 1, wherein the step of displaying the search result comprises displaying the search result together with at least portion of the obtained partial region (2501).

3. The method of claim 1, wherein the step of sending the search request comprises an image file corresponding to the obtained partial region (2501).

4. An electronic device, comprising:
a display;
a memory storing instructions; and
at least one hardware processor configured to execute the instructions to at least:
receive, through a search bar, a first user input;
obtain an image including a plurality of products as a first search result corresponding to the first user input;
display, on a display of an electronic device, the obtained image;
receive a second user input for selecting a partial region (2501) of the displayed image as a region of a product of the plurality of products included in the displayed image, wherein the second user input comprises at least one of a drag input or a touch input with respect to the displayed image;
obtain the partial region (2501) of the displayed image, based on the second user input;
display a plurality of floating icons indicating a plurality of query types on the displayed image, in response to the partial region (2501) being obtained;
receive a third user input for selecting an icon corresponding to a voice query type from among the plurality of query types;
display a query input window including a voice recording icon, in response to the third user input for selecting the icon corresponding to the voice type being received;
receive a voice input of inquiring a price, in response to a fourth user input for selecting the voice recording icon being received,
send, toward an external search server, a search request based at least on the obtained partial region (2501) of the displayed image and the voice input of inquiring the price;
receive, from the external search server, a search result based at least on the search request; and
display, on the display, the search result received from the external search server, wherein the displayed search result comprises:
an image of a search result product corresponding to a product comprised in the obtained partial region (2501), and
a price for the search result product.

5. The electronic device of claim 4, wherein the at least one hardware processor configured to execute the instructions to display the search result together with at least portion of the obtained partial region (2501).

6. The electronic device of claim 4, wherein the sent search request comprises an image file corresponding to the obtained partial region (2501).

7. A non-transitory computer-readable recording medium having recorded thereon instructions executable by at least one hardware processor of an electronic device having a display to cause the electronic device to perform the method of any of claims 1 to 3.

## Patentansprüche

1. Verfahren, umfassend:
Empfangen, über eine Suchleiste, einer ersten Benutzereingabe;
Erhalten eines Bildes, das eine Vielzahl von Produkten enthält, als ein erstes Suchergebnis entsprechend der ersten Benutzereingabe;
Anzeigen, auf einer Anzeige einer elektronischen Vorrichtung, des erhaltenen Bildes;
Empfangen einer zweiten Benutzereingabe zum Auswählen eines Teilbereichs (2501) des angezeigten Bildes als einen Bereich eines Produkts der Vielzahl von Produkten, die in dem angezeigten Bild enthalten sind, wobei die zweite Benutzereingabe mindestens eine von einer Zieheingabe oder einer Berührungseingabe in Bezug auf das angezeigte Bild umfasst;
Erhalten des Teilbereichs (2501) des angezeigten Bildes basierend auf der zweiten Benutzereingabe;
Anzeigen einer Vielzahl von schwebenden Symbolen, die eine Vielzahl von Abfragetypen angeben, auf dem angezeigten Bild als Reaktion auf das Erhalten des Teilbereichs (2501);
Empfangen einer dritten Benutzereingabe zum Auswählen eines Symbols, das einem Sprachabfragetyp aus der Vielzahl der Abfragetypen entspricht;
Anzeigen eines Abfrageeingabefensters, das ein Sprachaufzeichnungssymbol beinhaltet, als Reaktion auf die dritte Benutzereingabe zum Auswählen des Symbols, das dem empfangenen Sprachtyp entspricht;
Empfangen einer Spracheingabe für eine Preisanfrage als Reaktion darauf, dass eine vierte Benutzereingabe zum Auswählen des Sprachaufzeichnungssymbols empfangen wird;
Senden, an einen externen Suchserver, einer Suchanforderung basierend auf zumindest dem erhaltenen Teilbereich (2501) des angezeigten Bildes und der Spracheingabe für die Preisanfrage;
Empfangen, von dem externen Suchserver, eines Suchergebnisses basierend auf zumindest der Suchanforderung; und
Anzeigen, auf der Anzeige, des vom externen Suchserver empfangenen Suchergebnisses,
wobei das angezeigte Suchergebnis Folgendes umfasst:
ein Bild eines Suchergebnisprodukts, das dem Produkt entspricht, das in dem erhaltenen Teilbereich (2501) enthalten ist, und
einen Preis für das Suchergebnisprodukt.

2. Verfahren nach Anspruch 1, wobei der Schritt zum Anzeigen des Suchergebnisses Anzeigen des Suchergebnisses zusammen mit mindestens einem Abschnitt des erhaltenen Teilbereichs (2501) umfasst.

3. Verfahren nach Anspruch 1, wobei der Schritt zum Senden der Suchanforderung eine Bilddatei umfasst, die dem erhaltenen Teilbereich (2501) entspricht.

4. Elektronische Vorrichtung, umfassend:
eine Anzeige;
einen Speicher, der Anweisungen speichert; und
mindestens einen Hardwareprozessor, der konfiguriert ist, um die Anweisungen zumindest für Folgendes auszuführen:
Empfangen, über eine Suchleiste, einer ersten Benutzereingabe;
Erhalten eines Bildes, das eine Vielzahl von Produkten enthält, als ein erstes Suchergebnis entsprechend der ersten Benutzereingabe;
Anzeigen, auf einer Anzeige einer elektronischen Vorrichtung, des erhaltenen Bildes;
Empfangen einer zweiten Benutzereingabe zum Auswählen eines Teilbereichs (2501) des angezeigten Bildes als einen Bereich eines Produkts der Vielzahl von Produkten, die in dem angezeigten Bild enthalten sind, wobei die zweite Benutzereingabe mindestens eine von einer Zieheingabe oder einer Berührungseingabe in Bezug auf das angezeigte Bild umfasst;
Erhalten des Teilbereichs (2501) des angezeigten Bildes basierend auf der zweiten Benutzereingabe;
Anzeigen einer Vielzahl von schwebenden Symbolen, die eine Vielzahl von Abfragetypen angeben, auf dem angezeigten Bild als Reaktion auf das Erhalten des Teilbereichs (2501);
Empfangen einer dritten Benutzereingabe zum Auswählen eines Symbols, das einem Sprachabfragetyp aus der Vielzahl der Abfragetypen entspricht;
Anzeigen eines Abfrageeingabefensters, das ein Sprachaufzeichnungssymbol beinhaltet, als Reaktion auf die dritte Benutzereingabe zum Auswählen des Symbols, das dem empfangenen Sprachtyp entspricht;
Empfangen einer Spracheingabe für eine Preisanfrage als Reaktion darauf, dass eine vierte Benutzereingabe zum Auswählen des Sprachaufzeichnungssymbols empfangen wird,
Senden, an einen externen Suchserver, einer Suchanforderung basierend auf zumindest dem erhaltenen Teilbereich (2501) des angezeigten Bildes und der Spracheingabe für die Preisanfrage;
Empfangen, von dem externen Suchserver, eines Suchergebnisses basierend auf zumindest der Suchanforderung; und
Anzeigen, auf der Anzeige, des vom externen Suchserver empfangenen Suchergebnisses,
wobei das angezeigte Suchergebnis Folgendes umfasst:
ein Bild eines Suchergebnisprodukts, das einem Produkt entspricht, das in dem erhaltenen Teilbereich (2501) enthalten ist, und
einen Preis für das Suchergebnisprodukt.

5. Elektronische Vorrichtung nach Anspruch 4, wobei der mindestens eine Hardwareprozessor so konfiguriert ist, dass er die Anweisungen ausführt, um das Suchergebnis zusammen mit mindestens einem Abschnitt des erhaltenen Teilbereichs (2501) anzuzeigen.

6. Elektronische Vorrichtung nach Anspruch 4, wobei die gesendete Suchanforderung eine Bilddatei umfasst, die dem erhaltenen Teilbereich (2501) entspricht.

7. Nicht transitorisches computerlesbares Aufzeichnungsmedium mit darauf aufgezeichneten Anweisungen, die durch mindestens einen Hardwareprozessor einer elektronischen Vorrichtung mit einer Anzeige ausführbar sind, um die elektronische Vorrichtung zu veranlassen, das Verfahren nach einem der Ansprüche 1 bis 3 durchzuführen.

## Revendications

1. Procédé comprenant :
recevoir, par l'intermédiaire d'une barre de recherche, une première entrée d'utilisateur ;
obtenir une image incluant une pluralité de produits comme premier résultat de recherche ;
correspondant à la première entrée d'utilisateur ;
afficher, sur un affichage d'un dispositif électronique, l'image obtenue ;
recevoir une deuxième entrée d'utilisateur pour sélectionner une région partielle (2501) de l'image affichée en tant que région d'un produit de la pluralité de produits inclus dans l'image affichée, dans lequel la deuxième entrée d'utilisateur comprend au moins une d'une entrée par glisser ou d'une entrée par toucher par rapport à l'image affichée ;
obtenir la région partielle (2501) de l'image affichée, en se basant sur la deuxième entrée d'utilisateur ;
afficher une pluralité d'icônes flottantes indiquant une pluralité de types de requête sur l'image affichée, en réponse à l'obtention de la région partielle (2501) ;
recevoir une troisième entrée d'utilisateur pour la sélection d'une icône correspondant à un type de requête vocale parmi la pluralité de types de requête ;
afficher une fenêtre d'entrée de requête comprenant une icône d'enregistrement vocal, en réponse à la troisième entrée d'utilisateur pour la sélection de l'icône correspondant au type de voix étant reçue ;
recevoir une entrée vocale de demande de prix, en réponse à une quatrième entrée d'utilisateur pour sélectionner l'icône d'enregistrement vocal étant reçue ;
envoyer, vers un serveur de recherche externe, une requête de recherche en se basant au moins sur la région partielle obtenue (2501) de l'image d'affichage et l'entrée vocale de la demande du prix ;
recevoir, depuis le serveur de recherche externe, un résultat de recherche en se basant au moins sur la demande de recherche ; et
afficher, sur l'affichage, le résultat de recherche reçu depuis le serveur de recherche externe,
dans lequel le résultat de recherche affiché comprend :
une image d'un produit de résultat de recherche correspondant au produit compris dans la région partielle obtenue (2501), et
un prix pour le produit de résultat de recherche.

2. Procédé de la revendication 1, dans lequel l'étape d'affichage du résultat de recherche comprend l'affichage du résultat de recherche avec au moins une partie de la région partielle obtenue (2501).

3. Procédé de la revendication 1, dans lequel l'étape d'envoi de la demande de recherche comprend un fichier d'image correspondant à la région partielle obtenue (2501).

4. Dispositif électronique comprenant :
un affichage ;
une mémoire stockant des instructions ; et
au moins un processeur matériel configuré pour exécuter les instructions afin au moins de :
recevoir, par l'intermédiaire d'une barre de recherche, une première entrée d'utilisateur ;
obtenir une image comprenant une pluralité de produits en tant que premier résultat de recherche
correspondant à la première entrée d'utilisateur ;
afficher, sur un affichage d'un dispositif électronique, l'image obtenue ;
recevoir une deuxième entrée d'utilisateur pour sélectionner une région partielle (2501) de l'image affichée en tant que région d'un produit de la pluralité de produits inclus dans l'image affichée, dans lequel la deuxième entrée d'utilisateur comprend au moins une d'une entrée par glisser ou d'une entrée par toucher par rapport à l'image affichée ;
obtenir la région partielle (2501) de l'image affichée, en se basant sur la deuxième entrée d'utilisateur ;
afficher une pluralité d'icônes flottantes indiquant une pluralité de types de requête sur l'image affichée, en réponse à l'obtention de la région partielle (2501) ;
recevoir une troisième entrée d'utilisateur pour la sélection d'une icône correspondant à un type de requête vocale parmi la pluralité de types de requête ;
afficher une fenêtre d'entrée de requête comprenant une icône d'enregistrement vocal, en réponse à la troisième entrée d'utilisateur pour la sélection de l'icône correspondant au type de voix étant reçue ;
recevoir une entrée vocale de demande de prix, en réponse à une quatrième entrée d'utilisateur pour sélectionner l'icône d'enregistrement vocal étant reçue,
envoyer, vers un serveur de recherche externe, une requête de recherche en se basant au moins sur la région partielle obtenue (2501) de l'image d'affichage et l'entrée vocale de la demande du prix ;
recevoir, depuis le serveur de recherche externe, un résultat de recherche en se basant au moins sur la demande de recherche ; et
afficher, sur l'affichage, le résultat de recherche reçu depuis le serveur de recherche externe,
dans lequel le résultat de recherche affiché comprend :
une image d'un produit de résultat de recherche correspondant à un produit compris dans la région partielle obtenue (2501), et
un prix pour le produit de résultat de recherche.

5. Dispositif électronique de la revendication 4, dans lequel l'au moins un processeur matériel configuré pour exécuter les instructions pour afficher le résultat de recherche avec au moins une partie de la région partielle obtenue (2501).

6. Dispositif électronique de la revendication 4, dans lequel la demande de recherche envoyée comprend un fichier d'image correspondant à la région partielle obtenue (2501).

7. Support d'enregistrement non transitoire lisible par ordinateur sur lequel sont enregistrées des instructions exécutables par l'au moins un processeur matériel d'un dispositif électronique doté d'un affichage afin d'amener le dispositif électronique à mettre en œuvre le procédé selon l'une quelconque des revendications 1 à 3.
